# EUROPEAN PATENT APPLICATION

(11) **EP 4 678 966 A1**
(43) Date of publication of application: **14.01.2026**
(21) Application number: 24767461.7
(22) Date of filing: 11.03.2024
(51) Int. Cl.: F17C 5/00, F17C 5/06, G06Q 50/40, G06N 3/02

(54) **HYDROGEN FUELING METHOD AND DEVICE USING CONTROL MODEL**

(30) Priority: 09.03.2023 KR 20230031377; 31.03.2023 KR 20230043060; 12.01.2024 KR 20240005547; 12.01.2024 KR 20240005548; 12.01.2024 KR 20240005549
(71) Applicant: Hyundai Motor Company, Seoul 06797 (KR); Kia Corporation, Seoul 06797 (KR); Industrial Academic Cooperation Foundation of Hoseo University, Asan-si, Chungcheongnam-do 31499 (KR)
(72) Inventor: PARK, Cheol Woo, Hwaseong-si, Gyeonggi-do 18280 (KR); YOON, A Eun, Hwaseong-si, Gyeonggi-do 18280 (KR); KIM, Heon Chang, Seongnam-si, Gyeonggi-do 13554 (KR); CHUNG, Yong Ho, Asan-si, Chungcheongnam-do 31471 (KR)
(74) Representative: Hoffmann Eitle
(86) International application number: PCT/KR2024/003088
(87) International publication number: WO 2024/186174

(57) **Abstract**

A method for hydrogen fueling to mobilities using hydrogen as fuel, of the present invention, includes the steps of: carrying out a first hydrogen fueling process controlled on basis of a first fueling protocol; obtaining fueling data obtained in the first hydrogen fueling process; and providing, on the basis of the fueling data, auxiliary control information for a second hydrogen fueling process.

## Description

### [Technical Field]

The present disclosure relates to a control technology for hydrogen fueling of hydrogen fuel mobility, and more particularly, to a hydrogen fueling process and a platform for the process that enhance the efficiency of hydrogen fueling and improve the convenience, speed, and real-time performance of fueling.

### [Background Art]

The content described in this section is merely background information regarding the present exemplary embodiment and does not constitute prior art.

A hydrogen vehicle or hydrogen electric vehicle refers to a zero-emission vehicle that operates using electric energy generated by the reaction between high-pressure hydrogen stored in the vehicle and atmospheric air. A hydrogen electric vehicle is also referred to as a fuel cell electric vehicle (FCEV). Most hydrogen electric vehicles use hydrogen as an energy source to generate electricity through a fuel cell system. In hydrogen electric vehicles, not only is pure water (H₂ O) emitted during the process of generating electricity, but the hydrogen electric vehicle also has a function to remove ultrafine dust from the atmosphere during driving, making the hydrogen electric vehicle a promising future eco-friendly mobility solution. Given that hydrogen fuel is virtually unlimited on Earth and the process of energy generation is environmentally friendly, this technology is widely spotlighted as having the potential for broad industrial application.

Hydrogen fueled mobility refers to mobility that either uses hydrogen as an energy source or generates electric energy by using hydrogen as a fuel, and drives an electric motor using the generated electric energy. Hydrogen fueled mobility may include not only the hydrogen electric vehicles described above, but also aerial mobility, industrial trucks, trains, ships, and aircraft, as well as devices that generate electric energy using hydrogen as fuel and drive using the generated electric energy.

In most hydrogen electric vehicles, high-pressure hydrogen safely stored in a hydrogen fuel storage tank and oxygen introduced through an air supply system are delivered to a fuel cell stack, where an electrochemical reaction between hydrogen and oxygen generates electric energy. The generated electric energy is converted into kinetic energy via a drive motor to move the hydrogen electric vehicle, and the hydrogen electric vehicle discharges only pure water through an exhaust outlet while driving.

Meanwhile, a hydrogen fueled car, which is different from a hydrogen electric vehicle, is also a vehicle that uses hydrogen as fuel. In a hydrogen fueled car, hydrogen is directly combusted in an internal combustion engine (ICE), and the heat generated thereby is used to drive an electric motor. The method of refueling hydrogen for a hydrogen fueled car is not significantly different from the method of hydrogen fueling for a hydrogen electric vehicle.

In control techniques for supplying hydrogen to vehicles that utilize hydrogen as fuel, the goal is to ultimately control the temperature and pressure of the compressed hydrogen storage system (CHSS) on the fuel cell side so that the CHSS operate within the limit temperature and limit pressure conditions required for the safety of hydrogen fueling.

The conventional hydrogen fueling process, control techniques, and protocols for hydrogen electric vehicles were defined when wired and wireless communication technologies and computing techniques for control were not yet mature, and thus fail to properly reflect the recent advances in information and communication technology (ICT). Therefore, conventional hydrogen fueling technology for hydrogen electric vehicles is inefficient, slow, and not suitable for high-volume hydrogen fueling.

### [Disclosure]

### [Technical Problem]

An object of the present disclosure is to propose a hydrogen fueling process for hydrogen fueled mobility, as well as a communication protocol and a fueling protocol for the process, which overcomes the limitations and vulnerabilities of conventional unidirectional communication, and improves the safety, compatibility, efficiency, and reliability of hydrogen fueling.

Another object of the present disclosure is to improve the speed and real-time performance of the hydrogen fueling process and to enhance the accuracy of the control and prediction of the hydrogen fueling process by utilizing additional means such as an artificial neural network model and/or model predictive control.

Another object of the present disclosure is to propose a process that applies optimized communication protocols and fueling protocols in which hydrogen fueled mobility and a dispenser utilize conventional or advanced communication media to effectively achieve a hydrogen fueling goal.

Another object of the present disclosure is to propose an optimized fueling process according to surrounding circumstances and conditions during hydrogen fueling.

### [Technical Solution]

A method for fueling hydrogen to mobility using hydrogen as fuel according to exemplary embodiments of the present disclosure for achieving the above objects, may comprise performing a first hydrogen fueling process controlled based on a first fueling protocol; obtaining fueling data during the first hydrogen fueling process; and providing auxiliary control information for a second hydrogen fueling process based on the fueling data.

The obtaining of the fueling data may be performed during a predetermined first time interval. The providing of the auxiliary control information may be performed for the second hydrogen fueling process during a second time interval following the first time interval.

The obtaining of the fueling data may be performed until a predetermined first control target is achieved. The providing of the auxiliary control information may be performed until a second control target is achieved after the first control target has been achieved.

The performing of the first hydrogen fueling process may comprise obtaining first fueling control parameters for the hydrogen fueling process based on a control target set according to initial information; and performing the first hydrogen fueling process based on the first fueling control parameters.

The providing of the auxiliary control information may comprise predicting a result of the second hydrogen fueling process based on the fueling data using an auxiliary control model, before the second hydrogen fueling process is performed; and providing a second fueling control parameter, which is reset for the second hydrogen fueling process to the first fueling protocol as the auxiliary control information, based on the predicted result.

The providing of the auxiliary control information may comprise generating a second fueling control parameter, which is reset, using an auxiliary control model based on the fueling data; and providing the second fueling control parameter as a new control parameter of the first fueling protocol for the second hydrogen fueling process.

The second fueling control parameter may comprise an average fueling rate in a single-speed-based control scheme, an application table for single-speed-based fueling, a combination of a target pressure value and a fueling rate, or a fueling rate for achieving a predicted result value after a predetermined time.

The method may further comprise inputting the fueling data into the auxiliary control model to allow the auxiliary control model to retrain on the fueling data.

The providing of the auxiliary control information may comprise obtaining a second fueling control parameter, which is reset for the second hydrogen fueling process based on at least one of the mobility, a dispenser that fuels the mobility with hydrogen, a charging station in which the dispenser is installed, or an environmental factor that affects the hydrogen fueling process; and providing the second fueling control parameter to the first fueling protocol as the auxiliary control information.

The providing of the auxiliary control information may comprise obtaining control information regarding a temperature of a hydrogen storage tank at a charging station where a dispenser that fuels the mobility is located, a pressure of the hydrogen storage tank at the charging station, or a precooling temperature for the hydrogen storage tank at the charging station; and providing the obtained control information to the charging station.

The method may further comprise performing a second hydrogen fueling process controlled based on a first fueling protocol using the auxiliary control information.

In the providing of the auxiliary control information, the auxiliary control information may be provided to the first fueling protocol.

A method for fueling hydrogen to mobility using hydrogen as fuel, according to exemplary embodiments may comprise determining a communication level of an available communication protocol; determining a control level related to application of neural network-based control or model predictive control in the hydrogen fueling process based on the communication level; and performing a hydrogen fueling process based on the determined control level.

The performing of the hydrogen fueling process based on the determined control level may comprise predicting a current state information of the mobility based on a neural network model to which previous state information is input in a case where the available communication protocol is no communication and the fueling protocol requires the current state information of the mobility for hydrogen fueling control; providing the predicted current state information of the mobility to the fueling protocol as information for hydrogen fueling control; and performing the hydrogen fueling process based on a control parameter generated by the fueling protocol based on the current state information.

The determining of the communication level of the available communication protocol may be performed based on one or more of whether communication is possible between the mobility and a dispenser or a charging station that fuels the mobility, whether static data of the mobility, the dispenser, or the charging station may be collected, whether dynamic data thereof may be collected, reliability of the collected static data, reliability of the collected dynamic data, whether the collected static data may be used for safety functions, or whether the collected dynamic data may be used for safety functions.

The control level may be determined, which comprises to one or more of a method for obtaining data from the mobility side when communication is not possible in the available communication protocol, a method for processing or predicting dynamic data required in the control process from the mobility side when communication is not possible, a method for collecting static data of the mobility, the dispenser, or the charging station, a method for collecting dynamic data thereof, a method for using static data for hydrogen fueling control, or a method for using dynamic data for hydrogen fueling control, in the determining of the control level.

The control level may be determined such that static data and dynamic data of the mobility, dispenser, or hydrogen station are used as control input data required by the fuel supply protocol, and control parameters required by the fuel supply protocol are generated, in the case where the communication level of the available communication protocol allows bidirectional communication between the mobility and the dispenser or hydrogen station supplying hydrogen fuel to the mobility, and static and dynamic data of the mobility, dispenser, or hydrogen station may be collected, in the determining of the control level.

An apparatus for controlling a fueling process for fueling hydrogen to mobility using hydrogen as fuel, may comprise a processor executing the at least one instruction. The processor may be configured to perform a first hydrogen fueling process controlled based on a first fueling protocol, obtain fueling data from the first hydrogen fueling process, and provide auxiliary control information for a second hydrogen fueling process based on the fueling data.

The processor may further be configured to, when performing the first hydrogen fueling process, obtain a first fueling control parameter for the hydrogen fueling process based on a control target set based on initial information; and perform the first hydrogen fueling process based on the first fueling control parameter.

The processor may further be configured to, when providing the auxiliary control information: predict a result of the second hydrogen fueling process before the second hydrogen fueling process is performed, based on the fueling data using an auxiliary control model; and provide a reset second fueling control parameter based on the predicted result of the second hydrogen fueling process as the auxiliary control information to the first fueling protocol.

The processor may further be configured to, when providing the auxiliary control information: generate a reset second fueling control parameter based on the fueling data using an auxiliary control model; and provide the reset second fueling control parameter as a new control parameter of the first fueling protocol for the second hydrogen fueling process.

A control apparatus for controlling a fueling process of supplying hydrogen to a hydrogen-fueled mobility according to exemplary embodiments of the present disclosure may comprise a processor configured to execute the at least one instruction. The processor may be configured to determine a communication level of an available communication protocol, determine a control level related to the application of neural network-based control or model predictive control to a hydrogen fueling process based on the communication level, and perform the hydrogen fueling process based on the determined control level.

The hydrogen fueling control apparatus according to exemplary embodiments of the present disclosure may be disposed in a dispenser that supplies hydrogen to the mobility, or may be implemented as a controller that is not disposed in the dispenser but is electronically communicable with the dispenser and capable of influencing the fueling operation of the dispenser.

### [Advantageous Effects]

According to exemplary embodiments of the present disclosure, it is possible to overcome the limitations and vulnerabilities of conventional unidirectional communication in the hydrogen fueling process for hydrogen fueled mobility, as well as in the communication protocol and fueling protocol for the process, and to improve the safety, compatibility, efficiency, and reliability of hydrogen fueling.

According to exemplary embodiments of the present disclosure, it is possible to improve the speed and real-time performance of the hydrogen fueling process and to enhance the accuracy of the control and prediction processes of the hydrogen fueling process by utilizing additional means such as an artificial neural network model and/or model predictive control.

According to exemplary embodiments of the present disclosure, it is possible to implement an optimized fueling process based on surrounding circumstances and conditions during hydrogen fueling.

### [Description of Drawings]

FIG. 1 is a conceptual diagram illustrating a hydrogen fueling and control process for hydrogen fueled mobility to which exemplary embodiments of the present disclosure are applied.
FIG. 2 is a conceptual diagram illustrating an example of state changes that occur during the hydrogen fueling process for a hydrogen vehicle/hydrogen fueled mobility to which exemplary embodiments of the present disclosure are applied.
FIG. 3 is a conceptual diagram illustrating a platform or test platform to which the hydrogen fueling process according to exemplary embodiments of the present disclosure are applied.
FIG. 4 is a conceptual diagram illustrating a model predictive control (MPC) process according to exemplary embodiments of the present disclosure.
FIG. 5 is a conceptual diagram illustrating a platform or test platform for simulation used in the hydrogen fueling process according to exemplary embodiments of the present disclosure.
FIG. 6 is a conceptual diagram illustrating a concept of modeling, predicting, or controlling the hydrogen fueling process using an artificial neural network (ANN) in the hydrogen fueling process according to exemplary embodiments of the present disclosure.
FIG. 7 is a conceptual diagram illustrating a concept of controlling the hydrogen fueling process to reach a target output using model predictive control in the hydrogen fueling process according to exemplary embodiments of the present disclosure.
FIG. 8 is an operational flowchart illustrating a training and inference process of the artificial neural network when the artificial neural network is used for model predictive control in the hydrogen fueling process according to exemplary embodiments of the present disclosure.
FIG. 9 is an operational flowchart illustrating a process in which a control level is determined based on a communication level as a hydrogen fueling method according to exemplary embodiments of the present disclosure.
FIG. 10 is a conceptual diagram illustrating a hydrogen fueling and control process for improving control performance in a case where communication between mobility and a dispenser is not possible, based on the embodiment of FIG. 9.
FIG. 11 is an operational flowchart illustrating a hydrogen fueling and control process for improving control performance using auxiliary control models and auxiliary control information in a hydrogen fueling process performed based on a first fueling protocol as a hydrogen fueling method according to exemplary embodiments of the present disclosure.
FIG. 12 is a conceptual diagram illustrating an example of a platform in which the hydrogen fueling process is performed for implementing the embodiment of FIG. 11.
FIG. 13 is a conceptual diagram illustrating in detail a process in which auxiliary control information of the hydrogen fueling process is provided, as one exemplary embodiment of FIG. 12.
FIG. 14 is a conceptual diagram illustrating in detail a process in which auxiliary control information of the hydrogen fueling process is provided, as another exemplary embodiment of FIG. 12.
FIG. 15 is a conceptual diagram illustrating an example of a generalized hydrogen fueling control device, hydrogen fueling control system, hydrogen fueling simulation device, hydrogen fueling simulation system, hydrogen fueling test platform, hydrogen fueling test system, or computing system that may perform at least part of the processes of FIGS. 1 to 14.

### [Best mode of the Invention]

For a clearer understanding of the features and advantages of the present disclosure, exemplary embodiments of the present disclosure will be described in detail with reference to the accompanying drawings.

However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A or B" may mean "at least one of A and B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Hydrogen Fueled Vehicle", "Hydrogen Fueled Mobility: A non-polluting vehicle or mobility including 1) a vehicle or mobility driven by electrical energy generated by reactions of high-pressure hydrogen stored in the vehicle/mobility with atmospheric air such as "Hydrogen Electric Vehicle" or "Fuel Cell Electric Vehicle (FCEV)", and/or 2) a vehicle or mobility driven by a propulsion system fueled with hydrogen gas or fluid such as "Internal Combustion Engine (ICE)".

Additionally, the hydrogen fueled mobility refers to a mobility that uses hydrogen as fuel, and may include automobiles in the conventional sense, automobiles, and hybrid transportation means that utilize both human power and fuel.

In the following exemplary embodiments, a fueling protocol and/or a communication protocol for hydrogen fueling may be applied to the hydrogen fueled mobility.

The hydrogen fluid fuel may include gaseous hydrogen fuel or liquid hydrogen fuel.

"Compressed Hydrogen Storage System (CHSS)": An apparatus which is a part of the fuel cell of a vehicle to compress and store the hydrogen.

"Pressure Relief Device (PRD)": A device disposed in the CHSS and capable of isolating stored hydrogen from the other part of the fueling system and environment and exhausting the hydrogen to the outside.

Hydrogen fueling fundamentally refers to a process of supplying high-pressure hydrogen from a dispenser of a hydrogen station to compress and store hydrogen in a tank of a vehicle. Hydrogen fueling may be used interchangeably with "fueling" in a simplified sense, as the dispenser supplies hydrogen fuel to a hydrogen electric vehicle. That is, in the present specification, "fueling" may be used to mean fuel supply, hydrogen fueling, or charging, and charging may refer to charging of hydrogen fuel. For example, a fueling protocol may be referred to as a charging protocol, a fueling session may be referred to as a charging session, and a fueling method may be referred to as a hydrogen fueling method or a fueling method.

"Pressure Ramp Rate (PRR)": An increase rate of a pressure of CHSS and measured in mega-pascals per minute (MPa/min).

"Average Pressure Ramp Rate (APRR)": An average of the increase rate of the pressure from the beginning to the end of the hydrogen fueling.

"Precooling": A process of cooling the hydrogen in a hydrogen fueling station before the fueling.

"Dispenser": A component supplying precooled hydrogen to the CHSS.

"Nozzle": A device that is connected to a hydrogen dispensing system of the hydrogen fueling station and may be coupled to a receptacle of the hydrogen electric vehicle and to supply the hydrogen fuel to the hydrogen electric vehicle.

The fueling session may be used to refer to a concept that includes communication sessions performed throughout the entire use cases for hydrogen fueling.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

In the following detailed description, for convenience of explanation, exemplary embodiments related to a hydrogen electric vehicle or a fuel cell electric vehicle (FCEV) may be illustrated. However, it is apparent to those skilled in the art that the spirit of the present disclosure may be applied to various types of hydrogen fueled mobility. The hydrogen fueled mobility refers to a mobility device that uses hydrogen as an energy source or generates electric energy using hydrogen as fuel and drives an electric motor using the generated electric energy. The hydrogen fueled mobility may include not only hydrogen electric vehicles but also aerial mobility such as aircraft, industrial trucks, trains, ships, airplanes, or the like that generate electric energy using hydrogen as fuel and use it for driving.

Furthermore, the bidirectional communication process for hydrogen fuel supply according to the present disclosure may be partially applied not only to hydrogen fueled mobility but also to buildings or facilities that use hydrogen as an energy source.

In the following description, the hydrogen fuel may include at least one of hydrogen in a gaseous state and hydrogen in a liquid state, and may basically mean compressed hydrogen, but is not limited thereto.

In addition, although the vehicle using the bidirectional communication process for hydrogen fuel supply is described mainly with respect to a hydrogen electric vehicle (FCEV) for convenience of explanation, the vehicle is not limited thereto and may include a hybrid type electric vehicle (EV) that uses hydrogen as fuel, an internal combustion engine (ICE) vehicle, or the like.

In the following specification, some or all of the processes of a communication method performed in hydrogen fueled mobility, a communication protocol negotiation method, a hydrogen fueling (fuel supply) protocol negotiation method, and a hydrogen fueling (fuel supply) parameter negotiation method may be performed by an electronic control unit (ECU), a communication device, or a communication control device within the hydrogen fueled mobility.

In the following specification, some or all of the processes of a communication method performed by a dispenser, a communication protocol negotiation method, a hydrogen fueling (fuel supply) protocol negotiation method, a hydrogen fueling (fuel supply) parameter negotiation method, a hydrogen fueling (fuel supply) method, and a hydrogen fueling (fuel supply) control method may be performed by a controller, an electronic control unit, a communication device, or a communication control device of the dispenser. In addition, some processes of the methods may also be performed by a controller, an electronic control unit, a communication device, or a communication control device of a charging station associated with the dispenser.

Meanwhile, technologies disclosed prior to the filing date of the present application may be included as part of the configuration of the invention of the present application, if necessary, and such technologies are described in this specification to the extent that they do not detract from the spirit of the present disclosure. However, in describing the configuration of the invention of the present application, detailed descriptions of matters that are publicly known technologies and may be readily understood by those skilled in the art may be omitted, as such detailed explanations may obscure the spirit of the present disclosure. For example, technologies using thermodynamic models for hydrogen fueling control, technologies applying model predictive control (MPC) techniques for generalized dynamic control, and technologies configuring and controlling artificial neural networks for training and inference may utilize publicly known technologies disclosed prior to the filing of the present application, and at least some of these known technologies may be applied as element technologies necessary for implementing the present disclosure.

However, the spirit of the present disclosure does not intend to claim rights over such known technologies, and the contents of the known technologies may be included as part of the present disclosure to the extent that they do not depart from the spirit of the present disclosure.

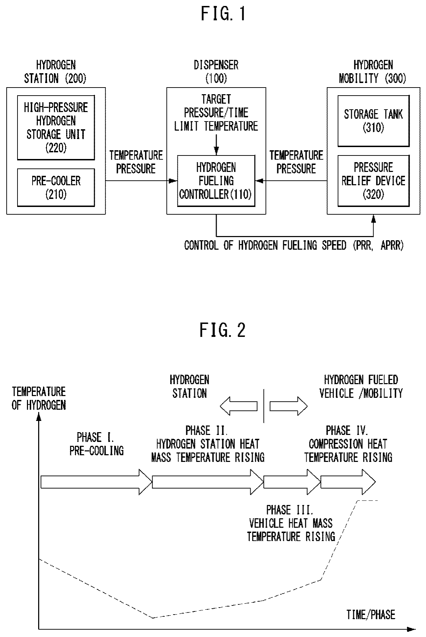

Hereinafter, detailed aspects of the present disclosure will be described through exemplary embodiments illustrated in FIGS. 1 to 16.

FIG. 1 is a conceptual diagram illustrating a hydrogen fueling and control process for hydrogen fueled mobility to which exemplary embodiments of the present disclosure are applied.

As shown in FIG. 1, precooled hydrogen gas is supplied from a hydrogen station 200 to a hydrogen vehicle (hydrogen fueled mobility/vehicle) 300 via a dispenser 100. In this case, the hydrogen fueling process may be described by a parameter including an average pressure ramp rate (APRR).

In general, a hydrogen storage system mounted on a vehicle may be largely divided into a high-pressure hydrogen tank, a pressure controllable high-pressure piping, and an external frame. High-pressure hydrogen tanks have been developed and commercialized with capacities of several tens to hundreds of liters, and for vehicle applications, multiple small and lightweight storage tanks are connected in parallel to achieve large capacities.

High-pressure hydrogen tanks are widely known as compressed hydrogen storage systems (CHSS) 310, and in this specification, for the sake of convenience, the term "tank" refers to CHSS 310, and the terms "tank" and CHSS 310 may be used interchangeably for ease of explanation.

In a typical hydrogen storage system, hydrogen storage is controlled using a boss unit through which hydrogen gas may flow in and out of the storage tank 310. Due to the characteristic that hydrogen injection and usage cannot occur simultaneously, a valve, a pressure-reducing mechanism, and various sensors for measurement are equipped at a single boss unit in order to control hydrogen storage.

The interface between the hydrogen station 200 and the hydrogen fueled mobility 300 is handled by the dispenser 100, which controls target pressure and injection rate by vehicle tank information and fueling information from the station 200 and the tank. An example of a currently used control logic is the control logic following the SAE J2601 (2020-05) standard.

In conventional technology, a communication method and a non-communication method may be used for delivering information from the hydrogen fueled mobility 300 to the dispenser 100. Even when communication is used, in the conventional technology, only temperature and pressure values of the vehicle storage tank 310 are simply transmitted unidirectionally to the dispenser 100, and the dispenser 100 does not actively utilize such information, using the information only for safety criteria such as emergency shutdown at limit temperature or pressure.

The control logic for safe and rapid fueling is entirely managed by the dispenser 100, and the vehicle storage tank 310 has only a minimal safety management device, which automatically releases hydrogen under conditions such as overheating via a pressure relief device (PRD) 320, without an active safety management scheme.

In FIG. 2, in order to respond to the phenomenon of temperature rise in hydrogen gas during hydrogen fueling, which will be described later, the station 200 includes a high-pressure hydrogen storage unit 220 and a pre-cooler 210. The pre-cooler 210 lowers the temperature of the hydrogen gas through pre-cooling and supplies the hydrogen gas to the hydrogen electric vehicle 300 via the dispenser 100.

In exemplary embodiments of the present disclosure, although a basic configuration similar to the conventional technology is used, a hydrogen fueling controller 110 inside the dispenser 100 actively controls the hydrogen fueling process by utilizing state information such as temperature, pressure and charging state information such as the state of charge (SOC) of the CHSS 310, which are received from the hydrogen fueled mobility 300 and the station 200.

According to exemplary embodiments of the present disclosure, real-time temperature data of the vehicle storage tank 310 is utilized to control the fueling rate in real time, and the system is designed to operate at the highest possible fueling rate that satisfies conditions below safety limits, thereby enabling reduction of fueling time within the available range.

In the conventional fueling protocol, safety boundary conditions are excessively defined, leading to overcooling during supply such that the temperature of most storage tanks 310 is measured around 40°C -50°C at the end of fueling.

According to exemplary embodiments of the present disclosure, the amount of pre-cooling required and provided is actively adjusted, thereby optimizing the cooling load of the station 200 and improving the operational efficiency of the hydrogen station 200.

The conventional protocol, which is designed primarily for lightweight hydrogen electric vehicles, presents the problem that all variables must be redefined and reflected in the standard when charging new types of mobility.

According to exemplary embodiments of the present disclosure, a control technique using an ANN-based learnable fueling logic allows for broad application to various mobility domains through a process of learning and training to update the logic itself when applying new devices.

In the conventional technology, the only countermeasure for preventing overheating of the storage tank in hydrogen electric vehicles is the release of gas through the pressure relief device (PRD) 320 when overheating occurs above a predetermined temperature.

According to exemplary embodiments of the present disclosure, by installing a cooling system 330, which will be described later, in the storage tank 310 itself, it is possible to simultaneously increase the fueling speed and actively respond to overheating of the storage tank 310, thereby improving the safety of the hydrogen fueled mobility 300.

According to exemplary embodiments of the present disclosure, it is possible to safely charge/supply hydrogen fuel while improving the efficiency of the hydrogen charging/supply process and enhancing the speed and real-time performance of the hydrogen charging/supply process.

According to exemplary embodiments of the present disclosure, a hydrogen charging control technique based on model predictive control (MPC) with ensured real-time performance may be provided.

According to exemplary embodiments of the present disclosure, a control technique with improved prediction accuracy of hydrogen fueling outcomes based on an artificial neural network (ANN) model may be provided. The accuracy of the prediction results may be improved by reflecting real-time measurements in the ANN model, which is trained using actual fueling data along with theoretical simulation results.

According to exemplary embodiments of the present disclosure, the efficiency of hydrogen charging control may be improved by using an intelligent meta system (IMS) to integrally manage the actual measured data and the predicted state information obtained from the model.

As described above, in the conventional hydrogen fueling process, the dispenser 100 is responsible for controlling the interaction between the hydrogen fueled mobility 300 and the hydrogen station 200. The dispenser 100 is equipped with a protocol, which is a method for injecting hydrogen into the hydrogen fueled mobility 300 according to a predetermined standard, and the dispenser 100 supervises the overall control.

An example of the protocol mounted in the dispenser 100 includes a protocol based on the international standard SAE J2601 (2020-05), which is also applicable in the exemplary embodiments of the present disclosure to the extent consistent with the purpose of the present disclosure.

Regarding minimum requirements for safety, various situations are simulated through thermodynamic modeling, and parameters derived from such simulations are utilized in methods such as a table-based single injection method and a partial real-time correction method based on the MC-formula.

The minimum requirements for safety include upper limits for the temperature and pressure conditions of the CHSS 310, as well as guidelines for the state of charge (SOC).

Simulations may be performed through thermodynamic modeling using boundary conditions that include best to worst cases.

Such a configuration may be applied to the configuration of the exemplary embodiments of the present disclosure to the extent consistent with the purpose of the present disclosure.

Even when following the configuration of FIG. 1, the following problems are found in the conventional technology in which the dispenser 100 does not actively control state values. These problems are also apparent in conventional technologies that rely solely on simulations using simple thermodynamic models.

In conventional technology, the worst expected boundary conditions (excessive boundary conditions) are assumed to predetermine the injection rate, so that unnecessary pre-cooling is performed and overall fueling speed is decreased. In such cases, the injection rate is simply determined by the average pressure ramp rate (APRR), which may hinder active response according to varying conditions. Unnecessary pre-cooling may lead to excessive energy consumption and operational costs.

Due to the reliance on simulation-based results, there are limitations on the applicable capacity or configuration of the storage tank 310. Further, for new systems, additional resources are required for development and application, resulting in a limitation on applicable targets.

Thermodynamic models require considerable time to derive calculation results from mathematical formulas, and thus the application is restricted in the absence of pre-calculated parameters derived from the model. The approach also lacks flexibility in detailed control.

In the table-based method of the conventional technology, parameters such as the temperature of precooled hydrogen provided by the station 200 or the temperature of the storage tank 310 measured in the hydrogen fueled mobility 300 are not utilized, resulting in very low efficiency and difficulty in responding flexibly to changes in surrounding conditions.

The MC-formula-based method of the conventional technology provides real-time correction of the pre-cooling temperature, but calculation and application of the MC-formula-based method are complex and difficult to expand due to limitations on applicable targets.

The protocols are developed with safe fueling completion as the primary goal and lack alternatives for actively controlling unexpected situations such as excessive pre-cooling or overheating of the storage tank 310. As a result, problems such as increased operational costs due to overcooling or fueling delays due to overheating may occur.

The features of the present disclosure are derived to solve these problems in the conventional technology, and are characterized by lowering the dependency on simulation and attempting active control of state variables by reflecting real-time measurement data.

FIG. 2 is a conceptual diagram illustrating an example of a state change that occurs in the hydrogen fueling process for hydrogen fueled mobility 300 to which exemplary embodiments of the present disclosure are applied.

As shown in FIG. 2, when hydrogen is injected into the hydrogen storage tank 310, the internal temperature rises due to compression heat, resulting in an increase in the temperature of the hydrogen gas inside the storage tank 310.

In the hydrogen fueling process for controlling temperature of the storage tank 310, precooled hydrogen gas is supplied so that the internal temperature of the storage tank 310 remains below 85°C at the final point of fueling completion.

During driving, the storage tank 310 is configured to minimize heat transfer by forming the tank dome and body with carbon fiber that surrounds the tank and has low thermal conductivity, in order to block heat exchange between the ambient air and the hydrogen gas stored inside.

When the temperature of the hydrogen gas inside the storage tank 310 rises during fueling, the surface temperature rise of the hydrogen storage tank 310 is small until fueling is complete due to the low heat transfer characteristics of the storage tank 310.

These characteristics block almost all heat exchange with ambient air that could mitigate the rapid temperature rise occurring inside the hydrogen storage tank 310 during fueling, and therefore requires a separate temperature management plan.

However, the conventional technology includes no cooling means other than receiving precooled hydrogen gas supplied from the station 200.

The hydrogen full-fueling time is managed by controlling pre-cooling and hydrogen injection rate at the hydrogen station 200 to maintain the temperature of the vehicle hydrogen storage tank below the upper limit of 85°C, but there is no separate temperature management plan for the storage tank 310 of the hydrogen fueled mobility 300.

As a result, especially during summer when the ambient air temperature is high, it becomes difficult to control the temperature of the vehicle storage tank 310 at the station 200, causing problems such as fueling delays.

In exemplary embodiments of the present disclosure, the characteristic curve in FIG. 2 is used as a base model. However, unlike the conventional technology, considering data of actual environmental variables (ambient temperature, atmospheric pressure, weather conditions, etc.), the operation load of the station 200 during Phase I (pre-cooling phase) and fueling speed (pressure ramp rate, PRR) during Phase II to Phase IV are optimized in the present disclosure, so that optimal control condition for actual environment may be derived in the present disclosure.

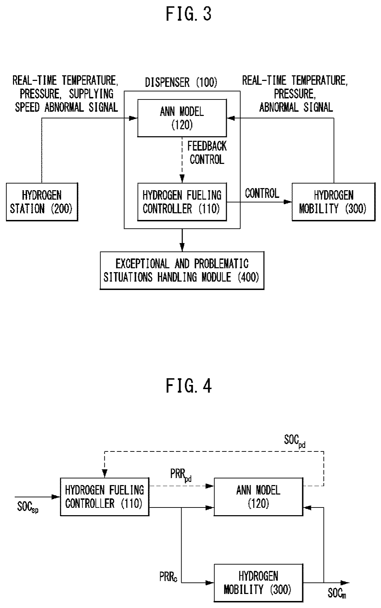

FIG. 3 is a conceptual diagram illustrating a platform or test platform to which the hydrogen fueling process according to exemplary embodiments of the present disclosure are applied.

As shown in FIG. 3, exemplary embodiments are shown in which an artificial neural network model 120 is equipped inside the dispenser 100 with the hydrogen fueling controller 110.

In case that the artificial neural network model 120 performs a model predictive control (MPC) process to predict the next state value, hydrogen fueling control based on the ANN-MPC method may be implemented. In case that a hydrogen fueling protocol allowing ANN-MPC-based hydrogen fueling control is used in FIG. 3, the ANN-MPC-based hydrogen fueling protocol is typically implemented in the dispenser 100 located between the station 200 and the mobility 300. In an alternative embodiment of the present disclosure, the ANN-MPC-based hydrogen fueling protocol may be implemented within the hydrogen fueling controller 110 or the artificial neural network model 120. Furthermore, in another alternative embodiment of the present disclosure, the ANN-MPC-based hydrogen fueling protocol, the hydrogen fueling controller 110, or the artificial neural network model 120 may be implemented as part of a controller that is capable of electronic communication with the dispenser 100 and may influence the hydrogen fueling process within the dispenser 100, even though not physically located inside the dispenser 100.

Referring again to FIG. 3, the artificial neural network model 120 may receive data from the station 200 and/or the mobility 300 using real-time communication, and may deliver information for controlling hydrogen fueling for optimal hydrogen fueling to the hydrogen fueling controller 110 based on the data.

The real-time communication data may include static and dynamic data. Static data refers to information that does not change over time, such as the capacity, configuration, or type of facility of the storage tank, and dynamic data refers to information such as temperature or pressure that may change during the fueling process.

The static data may include, for example, the volume of the tank of the mobility 300 or the station 200, pressure rating, maximum allowable pressure, tank type, number of tanks, tank size, tank serial number, tank manufacturer, tank usage data, and allowable temperature range of hydrogen fluid in the tank.

The dynamic data may include, for example, fueling commands (e.g., start, stop, pause, abort, increase flow rate, decrease flow rate, tank change commands, etc.), control parameters for fueling (e.g., average pressure ramp rate (APRR), pressure ramp rate, etc.), real-time measurements of pressure and/or temperature fluctuations in the tank (which may indicate leakage and/or impending failure), state of charge (SOC) of the tank on the station or mobility side, ambient temperature outside the tank, and real-time measurements of the flow rate of hydrogen fluid entering the tank.

Referring again to FIG. 3, the hydrogen fueling control method based on the ANN-MPC fueling protocol may set the basic conditions required for hydrogen fueling based on static data before the start of hydrogen fueling, and perform real-time control based on dynamic data during the hydrogen fueling process.

As shown in FIG. 3, an exceptional and problematic situations handling module 400 may be added. The ANN-MPC model is fundamentally based on real-time bidirectional communication and may achieve optimal performance under conditions that allow real-time bidirectional communication.

However, various situations may occur as described below, during the verification process before starting hydrogen fueling or when deviating from real-time communication conditions during actual hydrogen fueling.
(1) No communication situation: Communication is not possible because the mobility 300 or the station 200 is not equipped with communication functionality, the communication function is faulty, or the communication function fails during fueling.
(2) Communication error: Communication is possible with the mobility 300 or the station 200, but components, sensors, or equipment operate abnormally, causing partial data loss or errors.
(3) Unverified equipment, components, or vehicle: Communication is possible with the mobility 300 or the station 200, and data is collected normally, but the reliability of the data provided by the mobility 300 or equipment is low, requiring verification or limited use.
(4) Uncertified communication protocol: Communication is possible with the mobility 300 or the station 200, but the communication method is not defined by the standard or is not certified in the relevant country, and thus safety, reliability, and stability are not ensured.

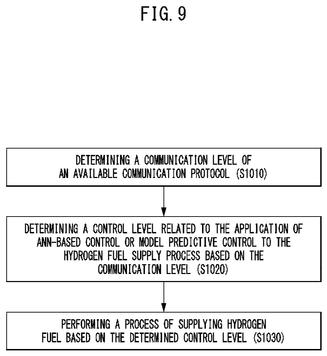

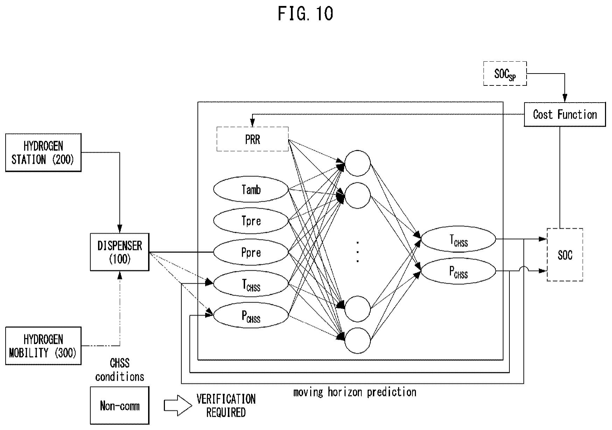

Real-time communication-based control of ANN-MPC may provide optimal performance functionally, but a strategy is required that may effectively, progressively, and differentially respond to various communication-related problems that may occur in order to be applied to a real situation. Means for solving such problems are proposed in the embodiments of FIG. 9 or FIG. 10, which will be described later.

FIG. 4 is a conceptual diagram illustrating a model predictive control (MPC) process according to exemplary embodiments of the present disclosure.

In a control method using MPC, the accuracy of control increases as the accuracy of the prediction model improves. The control method shown in FIG. 4 is an ANN-MPC, in which an artificial neural network model 120 is used as the prediction model, and a feedback control loop including the hydrogen fueling controller 110 is used as the control scheme.

As shown in FIG. 4, temperature, pressure, and ambient temperature of the mobility 300 and the station 200 are used as inputs, and the temperature and pressure of the storage tank 310 of the mobility 300 are set as outputs.

Although embodiments that predict the temperature and pressure of the hydrogen fueled mobility 300 as outputs is shown in FIG. 4, in alternative embodiments of the present disclosure, embodiments that predict the temperature and pressure of the storage tank of the station 200 as outputs may be implemented.

When new inputs are provided to the artificial neural network model 120, which has learned the correlation between inputs and outputs using simulation data from a theoretical model and data measured on-site, the output may be predicted.

When a specified SOC value (target value) is provided to the controller 110, a pressure ramp rate (PRR), which is the fueling rate required to achieve the target value, may be predicted. When PRR_pd is given as a control parameter, the artificial neural network model 120 may predict SOC_pd. The SOC_pd may replace the initial target SOC_sp and be input to the controller 110. At this time, PRR_c is actually applied, and the resulting SOC_m on the mobility 300 may be fed back to the artificial neural network model 120 to improve the prediction accuracy of SOC_pd by serving as a part of the objective or loss function used in training.

As shown in both FIGS. 3 and 4, real-time temperature, pressure, fueling rate on the station 200 (which may correspond to PRR), and fault signals may be delivered to the artificial neural network model 120. In an alternative embodiment of the present disclosure, these same signals may also be delivered to the hydrogen fueling controller 110.

Real-time temperature, pressure, and fault signals of the mobility 300 may also be delivered to the artificial neural network model 120. In an alternative embodiment of the present disclosure, the real-time temperature, pressure, and fault signals may likewise be delivered to the hydrogen fueling controller 110.

The hydrogen fueling controller 110 generates actual control commands, and hydrogen fueling of the dispenser 100 is performed based on the control commands. Part of the control commands, such as a temperature down command, may also be delivered to the mobility 300.

At this time, the commands or information related to hydrogen fueling control may include a pressure ramp rate (PRR) for hydrogen fueling inside the tank 310 of the mobility 300, control commands for the pressure ramp rate, and/or resulting state information on the dispenser 100 following execution of the control commands. Furthermore, information related to hydrogen fueling control may include variables that affect the state change of hydrogen in the vehicle tank 310 of the mobility 300 such as real-time PRR or mass flow rate of compressed hydrogen [m_dot, kg/s] derived during the feedback control process, and/or result information from control performed using such variables. These control-related data may also influence the weights or parameters of the hidden layers of the artificial neural network model 120.

A hydrogen fueling control request based on a hydrogen fueling protocol may include a control command for a pressure ramp rate (PRR) for fueling hydrogen into the vehicle tank 310.

The hydrogen fueling control-related information may include at least one of a hydrogen fueling control request, and state information resulting from execution of the hydrogen fueling control request. The control request for a state change of hydrogen may include a control request for at least one of temperature and pressure of hydrogen in the vehicle tank 310.

The state change of hydrogen in the vehicle tank 310 may include at least one of temperature, pressure, and state of charge (SOC).

As a theoretical simulation, a thermodynamic model such as H2FillS (Hydrogen Filling Simulation) may be used. The thermodynamic model may include a model and/or software designed to track and report at least one of the transient changes in hydrogen temperature, pressure, and mass flow, and/or transient changes in the state of hydrogen inside the vehicle tank during hydrogen fueling into hydrogen fueled vehicles or mobility. Of course, the concept of the present disclosure is not limited to embodiments using specific thermodynamic models.

The hydrogen fueling protocol may include, for example, the hydrogen fueling protocol defined in SAE J2601.

The thermodynamic model may generate output data based on modeling and simulation when input data equivalent to the input data of the artificial neural network is provided. At this time, variables of the thermodynamic model may be adjusted according to the hydrogen fueling protocol, and for the same input data, different output data may be derived for different hydrogen fueling protocols.

In exemplary embodiments of the present disclosure, the artificial neural network may be trained using on-site data collected from a test platform as the input and output data, instead of using the input/output data from a thermodynamic model. That is, some of the on-site data collected from the test platform may be provided as input data to the artificial neural network, and another part may be provided as ground truth data corresponding to the output data of the artificial neural network.

The internal parameters of the artificial neural network may be trained either without initialization or after being initialized with predetermined values based on the on-site data. For example, the internal parameters of the artificial neural network may be initialized based on input and output data derived from a thermodynamic model and used in initial training.

Training of the artificial neural network does not necessarily require deep learning and may use shallow learning.

The test platform according to exemplary embodiments of the present disclosure may rely on dynamic field data to optimize the hydrogen fueling process.

Exemplary embodiments of the present disclosure may predict the next state using an artificial neural network-based model predictive control (MPC) technique. At this time, the artificial neural network model 120 may be trained using theoretical results, on-site data, or both.

The artificial neural network model 120 may be a trained model that receives hydrogen fueling control-related information, the result of a hydrogen fueling control request, and state information of hydrogen in the vehicle tank 310, and predicts a change in the state of hydrogen in the vehicle tank 310.

The artificial neural network model 120 may be a trained model that receives hydrogen fueling control-related information, the current state of hydrogen in the vehicle tank 310, the state of hydrogen supplied from the dispenser 100 to the mobility 300, and the ambient temperature, and predicts future changes in the state of hydrogen in the vehicle tank 310.

The artificial neural network model 120 may be a trained model that predicts the change in the state of hydrogen in the vehicle tank 310 according to each target state of hydrogen in the vehicle tank 310 specified by hydrogen fueling control-related information and according to each hydrogen fueling protocol.

The artificial neural network model 120 may update its parameters by being trained to predict the change in the state of hydrogen in the vehicle tank 310 based on hydrogen fueling control-related information and state information of hydrogen in the vehicle tank 310, using on-site data of the state change in the vehicle tank 310 as ground truth data.

The artificial neural network model 120 may be a trained model that predicts the change in the state of hydrogen in the vehicle tank 310 using a model predictive control (MPC) technique.

In case that the pre-cooling function of the station 200 or the cooling system 310 of the mobility 300 is unavailable, hydrogen fueling control may be performed by taking such factors into account.

Big data corresponding to each type and individual ID of the dispenser 100, station 200, and mobility 300, the control target states (temperature, pressure, SOC), the initial states (temperature, pressure), and each type of hydrogen fueling protocol may be collected, and standardized items that enable optimization and precise specification of the hydrogen fueling process may be derived by training the test platform using the dynamic changes in on-site data corresponding to each case.

According to exemplary embodiments of the present disclosure, the reliability of the hydrogen fueling process may be improved by collecting and processing on-site hydrogen fueling data.

The on-site data regarding the state change of hydrogen in the vehicle tank 310 may first be obtained from the mobility 300. That is, regardless of whether a control request is delivered to the hydrogen vehicle, the mobility 300 may obtain the on-site data of the state change of hydrogen in the vehicle tank 310. Alternatively, in another exemplary embodiment of the present disclosure, the control request may include a request for on-site data, and the mobility 300 may obtain the on-site data in response to the control request/on-site data request.

On-site data may include data obtained from a test environment configured with a test setup or a responsive (feedback-capable) device corresponding to a hydrogen vehicle side, a test setup or a responsive (feedback-capable) device corresponding to a hydrogen storage cylinder and dispenser side of a hydrogen station, and/or a test setup or execution device to which module A corresponding to a dispensing control system side can be mounted.

The on-site data refers to data obtained from the station 200 and/or the mobility 300 during the actual hydrogen fueling/supply process. In this case, the on-site data may include data obtained not only when the actual station and the actual vehicle are used, but also when part or all of the environment is a test environment.

The on-site data may include data obtained from a test environment composed of a hydrogen vehicle-equivalent test environment or feedback-enabled device, a station-side hydrogen storage cylinder and dispenser-equivalent test environment or feedback-enabled device, and/or a test environment or execution device in which a module A, corresponding to a dispensing control system, is mounted.

In this case, the on-site data may be obtained from a fueling field or test environment composed of all three test environments or devices described above, or from one that includes any of them.

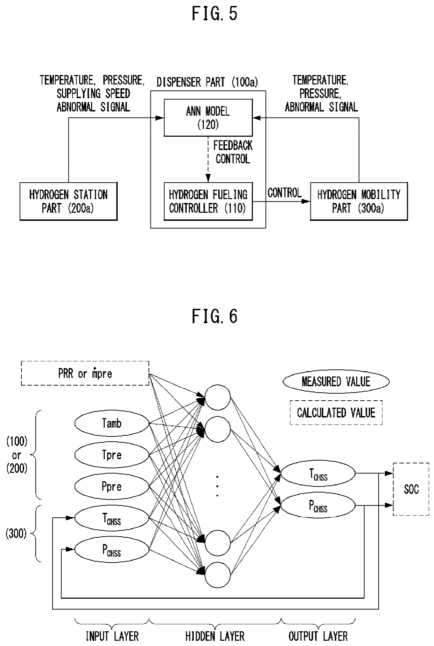

For example, the on-site data may include data obtained from a test environment or fueling field configured with simulation models associated with module B 150 and module C 160 as shown in FIG. 5.

The feedback-enabled device may refer to a device that includes a database built based on actual on-site data and that may respond to cases requested by module A.

The on-site data may include static data and dynamic data, and may be classified into static data (e.g., type of vehicle tank 310, volume of vehicle tank 310, number of modules/banks of vehicle tank 310) and dynamic data (e.g., temperature and pressure of hydrogen in the vehicle tank 310).

In the station 200, a plurality of hydrogen storage cylinders may be arranged and operated as a bank system. The real-time on-site information fed back to the dispenser 100 in response to a request to the station 200 may include temperature and pressure information for each bank.

A plurality of banks may be switched and connected to the dispenser 100 based on a request from the dispenser 100 and/or a selection by the station 200. In this case, the temperature and pressure information for each bank, included in the real-time on-site information fed back from the station 200 in response to the request from the dispenser 100, may influence the selection and/or switching of the banks.

Based on the temperature and pressure information for each bank included in the real-time on-site information fed back from the station 200 upon the request from the dispenser 100, the state of at least one of the banks in the bank system may be adjusted.

For example, as a preparation step, based on the current state information of the banks within the station 200, at least one of the banks may be adjusted to have a temperature and pressure suitable for fueling. Such adjustment may be performed in response to a request from the dispenser 100 or may be performed by the control logic of the station 200.

FIG. 5 is a conceptual diagram illustrating a simulation platform or test platform used in the hydrogen fueling process according to exemplary embodiments of the present disclosure.

As shown in FIG. 5, a mobility part 300a for simulating an actual mobility 300, a station part 200a for simulating an actual station 200, and a dispenser part 100a for simulating an actual dispenser 100 are illustrated.

In FIG. 5, the mobility part 300a, the station part 200a, and the dispenser part 100a may be implemented through the merging, combination, or competition between a simulation model and a data-based model using real-time on-site dynamic data.

To analyze process state changes between the dispenser 100 and the station 200, a learning model based on on-site data between the dispenser 100 and the mobility 300 may function as a reference for the interaction process between the dispenser part 100a and the mobility part 300a.

On the contrary, to analyze process state changes between the dispenser 100 and the mobility 300, a learning model based on on-site data between the dispenser 100 and the station 200 may function as a reference for the interaction process between the dispenser part 100a and the station part 200a.

In alternative embodiments of the present disclosure, the integrated management system that controls the simulation of FIG. 5 may be implemented in the form of a cloud system and/or a remote server.

Although exemplary embodiments focusing on the artificial neural network model 120 are illustrated in the present specification, other embodiments of the present disclosure are not necessarily limited to the artificial neural network model 120 or the model predictive control technique. In another embodiment of the present disclosure, after hydrogen fueling control-related information and/or feedback control based on a hydrogen fueling protocol is delivered, real-time on-site data may be fed back in response. Based on this real-time on-site data, the hydrogen fueling control-related information and/or feedback control may be updated, or the next hydrogen fueling control-related information and/or feedback control may be generated.

When the station part 200a functions as a simulation model, the mobility part 300a may serve for a modulation and optimization of the temperature of the CHSS 310.

When the mobility part 300a functions as a simulation model, the station part 200a may serve for stabilization and control of the pre-cooling temperature.

An integrated management system controlling the simulation of FIG. 5 may obtain a difference between a simulation result regarding the change in the state of hydrogen in the vehicle tank corresponding to hydrogen fueling control-related information, and on-site data of the state change in the vehicle tank.

The integrated management system controlling the simulation of FIG. 5 may update the model 120 for the hydrogen fueling process for hydrogen vehicles based on the difference between the simulation result and the on-site data corresponding to the hydrogen fueling control-related information.

The integrated management system controlling the simulation of FIG. 5 may obtain a simulation result regarding the change in the state of hydrogen in the vehicle tank corresponding to a control request by using a thermodynamic model that tracks at least one transient change among the temperature, pressure, and mass flow of hydrogen in the vehicle tank.

The integrated management system controlling the simulation of FIG. 5 may obtain a simulation result regarding the change in the state of hydrogen in the vehicle tank corresponding to a hydrogen fueling control request by inputting a future predicted hydrogen fueling control request into the model for the hydrogen fueling process, and applying a model predictive control (MPC) technique.

After updating the model 120, the integrated management system controlling the simulation of FIG. 5 may replace the hydrogen fueled mobility 300 with the model 120, and obtain at least one of simulation data or on-site data on the change in the state of hydrogen supplied from the station 200 to the dispenser 100 in response to a second control request between the dispenser 100, which supplies hydrogen to the hydrogen fueled mobility 300, and the station 200, which supplies hydrogen to the dispenser 100.

After updating the model 120, the integrated management system controlling the simulation of FIG. 5 may replace the station 200 with the model 120 and obtain at least one of simulation data or on-site data on the change in the state of hydrogen in the vehicle tank of the hydrogen fueled mobility 300 in response to a third control request between the hydrogen fueled mobility 300, which receives hydrogen from the dispenser 100, and the dispenser 100.

The conventional hydrogen fueling process or hydrogen fueling control techniques face difficulties in achieving target SOC, nozzle-end temperature/pressure, and CHSS 310 temperature/pressure as specified. Additionally, theoretical simulation-based hydrogen fueling methods do not match actual on-site data due to pressure variability, unstable flow rate, and high environmental variability.

The discrepancy between simulation results and actual on-site data arises from device-specific characteristics and environmental variability that are difficult to fully consider in theoretical simulations. Even under the same hydrogen fueling protocol, the final on-site data may vary depending on the initial or final target values. Conversely, the final on-site data may also differ under the same target values or initial conditions when different hydrogen fueling protocols are used.

To address these conventional issues, exemplary embodiments of the present disclosure may adopt real-time on-site data utilization, bidirectional communication among devices, predictive control techniques, integrated system-wide control including both the station and vehicle, and the use and standardization of hydrogen fueling data based on user requirements.

Additionally, the exemplary embodiment of the present disclosure may enable enhancement of existing hydrogen fueling protocols, standardization of on-site fueling data formats, and compilation and diagnosis of dynamic field data.

With respect to the enhancement of existing hydrogen fueling protocols, exemplary embodiments of the present disclosure may include the following.

Existing hydrogen fueling protocols may be selected as test targets.

The artificial neural network-based model predictive control (ANN-MPC) may be executed under the same fueling conditions along with the execution of the existing hydrogen fueling protocol, and the results of fueling control using ANN-MPC may be compared with the results of control using the existing hydrogen fueling protocol to enhance or improve the conventional hydrogen fueling protocol.

The supervisory system 130 may embed a test-target protocol 131 and may request fueling control based on the embedded protocol, and compare a control value with a "predicted output" input from the ANN-MPC.

The supervisory system 130 or the controller may execute an existing hydrogen fueling protocol and deliver hydrogen fueling control-related information to the hydrogen fueled mobility 300 via the communication interfaces 140 and 160, and may obtain on-site data regarding changes in the state of hydrogen in the vehicle tank via the communication interfaces 140 and 160.

The supervisory system 130 or the controller may obtain a hydrogen fueling control sequence generated by the model 120 for the hydrogen fueling process (in the case of using the ANN-MPC technique, may predict a future time-series control sequence input), and based on the hydrogen fueling control sequence generated by the model 120, may enhance the existing hydrogen fueling protocol.

The supervisory system 130 or the controller may obtain result data from the execution of the hydrogen fueling control sequence generated by the model for the hydrogen fueling process, and based on a comparison between the result data from executing the hydrogen fueling control sequence and on-site data from the existing hydrogen fueling protocol, may enhance a portion of the existing hydrogen fueling protocol using the hydrogen fueling control sequence.

At this time, the fueling control result using the artificial neural network model 120 may be obtained by operating the model 120 or from a pre-built database. The basic specification used in the test target charging protocol 131 may remain unchanged, and detailed aspects, such as a charging table or logic, may be enhanced or improved with reference to charging control values of the artificial neural network model 120. In this case, when a comparison between the fueling control result using the artificial neural network model 120 and the on-site data obtained from the execution of the test-target fueling protocol 131 shows that the performance of the fueling control result from the artificial neural network model 120 is superior, the detailed elements of the test-target fueling protocol 131 may be partially improved. This comparison between the fueling control result and the execution result of the test-target fueling protocol 131 may be conducted for all or a portion of the hydrogen fueling process.

In exemplary embodiments of the present disclosure, a lumped thermodynamic model for the artificial neural network used in dispenser-vehicle interaction may be employed by taking into account the following features.
- 0-dimensional unsteady state mass and energy balance
- 1-dimensional heat transfer through the vehicle tank wall

### CoolProp for evaluation of hydrogen properties

Exemplary embodiments of the present disclosure may perform a comparative analysis between theoretical simulation results and real on-site data.

Exemplary embodiments of the present disclosure may perform predictive analysis under specific conditions in addition to the conditions assumed by the hydrogen fueling protocol.

FIG. 6 is a conceptual diagram illustrating a concept of modeling, predicting, or controlling a hydrogen fueling process using an artificial neural network (ANN) in the hydrogen fueling process according to exemplary embodiments of the present disclosure.

As shown in FIG. 6, current state measurement values are input into the input layer.

At this time, the ambient temperature Tamb, pre-cooled gas temperature Tpre, and pre-cooled gas pressure Ppre may be measured at the nozzle of the dispenser 100 or the station 200.

Hydrogen gas temperature T_{CHSS} and hydrogen gas pressure P_{CHSS} are values measured on the CHSS 310 of the hydrogen fueled mobility 300, and the actual measured values may be input to the input layer.

In the training process of the artificial neural network, the currently measured values are provided to the input layer, and the next measurement values are provided to the output layer, serving as ground truth data for the learning process of the artificial neural network. This learning process may be one in which the artificial neural network learns a function capable of predicting the next measurement values at the output layer based on the combination of input measurement values. The correlation between the input data and the output data is learned, thereby enabling prediction using real dynamic fueling data alongside theoretical results.

During the inference or output process using the artificial neural network, the actual on-site measurement values are provided to the input layer, and the prediction for the next measurement values is obtained as the output through the operation of the artificial neural network.

The learning process of the artificial neural network used in the exemplary embodiment of the present disclosure may be either shallow learning or deep learning, and among known neural networks, a type of network suitable for the purpose of the present disclosure may be adopted.

Values input through the input layer are passed to the output layer after undergoing operations based on the weights of the hidden layers.

The state values output by the output layer (predicted values for the next state) may be used to calculate charging state variables, such as the state of charge (SOC), by using at least part of a thermodynamic model.

In the exemplary embodiment of the present disclosure, hybrid control combining a theoretical simulation model and an artificial neural network is also possible. Thus, even with limited data, desired results may be achieved through learning, and suitable performance may be realized using a lightweight neural network.

The real-time pressure ramp rate (PRR) or mass flow rate of compressed hydrogen (kg/s) [m_dot], derived during the feedback control process, may influence the weights or parameters of the hidden layers of the artificial neural network.

The artificial neural network-based hydrogen fueling technique of the present disclosure may enhance the accuracy of predicted fueling outcomes using the model. Because actual fueling data is used together with theoretical simulation results, real-time measurement values may be reflected, and prediction accuracy may be further improved.

Whereas conventional control protocols calculate and predict results through simulations tailored to each individual situation, the exemplary embodiment of the present disclosure differs in that the exemplary embodiment of the present disclosure improves accuracy through repeated training across diverse situations.

Due to this difference, in the exemplary embodiment of the present disclosure, accuracy improves progressively through updates as various theoretical values and empirical results are added. Even though a new fueling process is introduced that uses a different configuration of storage tank 310 or changes in flow rate, functionality of the new fueling process may be updated in the model by adding actual data through training, allowing wide applicability across various mobility fields.

As a hydrogen fueling control technique for hydrogen fueling tests of the hydrogen fueled mobility 300 according to exemplary embodiments of the present disclosure, model predictive control (MPC) may also be used.

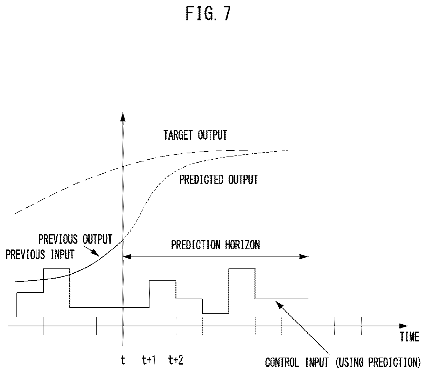

FIG. 7 is a conceptual diagram illustrating a concept of controlling the hydrogen fueling process using model predictive control (MPC) to reach a target output in the hydrogen fueling process according to exemplary embodiments of the present disclosure.

As shown in FIG. 7, model predictive control (MPC) is a control method that uses a process model to predict future outputs according to inputs, optimizes those predictions, and uses the resulting control input. In the process of controlling a system, the process response must remain within a defined range to satisfy various boundary conditions, and compared to other control methods, MPC may effectively ensure that the process response remains within the specified range.

MPC plans the inputs to obtain a process response approaching the target output by a prediction horizon time, obtain the expected response through the prediction model, and only the control input is used as the control signal. After the plant output is obtained, the same process is repeated based on the output.

In the exemplary embodiment of the present disclosure, when the hydrogen fueling model has been sufficiently validated, the future fueling outcome may be predicted from the hydrogen fueling model and current measurement values. Based on the prediction and fueling values, the pressure ramp rate (PRR) may be controlled in real time so that specific variables such as the hydrogen gas temperature TCHSS or hydrogen gas pressure PCHSS in the CHSS 310 reach the optimal fueling target without violating any constraint conditions.

As shown in FIG. 7, in the exemplary embodiments of the present disclosure, MPC-based control may be used to calculate future output values based on current measurement values and model prediction values. The operation parameters may be adjusted so that the predicted future response moves toward the setpoint (target) in an optimal manner.

For example, at the current time i, n-number of model-based predictions may be generated. These n-number of predicted values form the prediction horizon.

Each model-based prediction, or prediction horizon point, corresponds to a control horizon. That is, to achieve n-number of model-based predictions, n-number of control actions or control commands form the control horizon.

In practice, only the first control action at time i+1 among the n-number of model predictions and control actions generated at time i is delivered to the system. As time progresses to time i+1, a new set of n-number of model predictions and control actions is generated, forming a new prediction horizon and control horizon, respectively.

This method of expanding or moving the horizon while controlling the system is known as MPC. In the exemplary embodiment of the present disclosure, MPC-based control may be executed using both measured and predicted values of state information (state values) including the temperature and pressure of hydrogen gas in the CHSS 310.

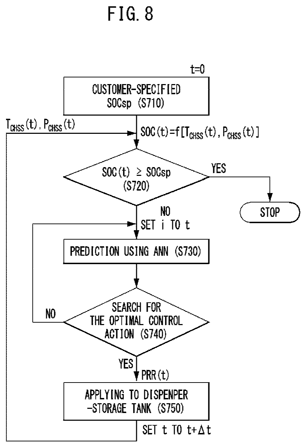

FIG. 8 is an operational flowchart illustrating the training and inference process of the artificial neural network when using the artificial neural network for model predictive control in the hydrogen fueling process according to exemplary embodiments of the present disclosure.

As shown in FIG. 8, a training process of an artificial neural network for the artificial neural network-model predictive control (ANN-MPC) technique is illustrated according to exemplary embodiments of the present disclosure.

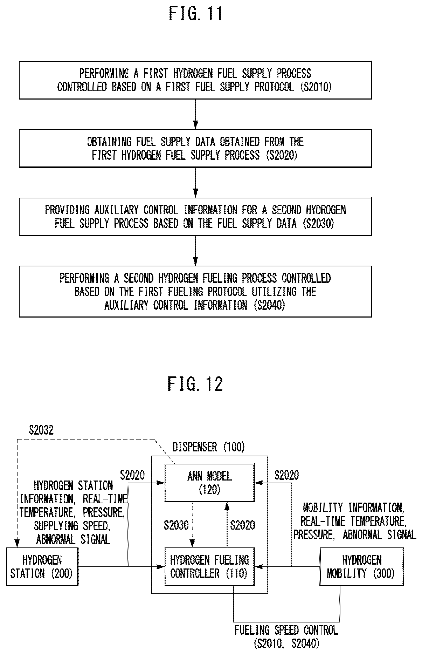

In FIG. 12, it is assumed that the artificial neural network has been trained to obtain the MPC-based prediction horizon and control horizon, and in particular, has been trained to obtain n future predictions and corresponding control commands in a manner that optimizes the process in which the future response reaches the setpoint through MPC.

As shown in FIGS. 11 and 12, in exemplary embodiments of the present disclosure, a control system may be configured based on an artificial neural network (ANN) model 120, and a test platform system for real-time control based on model predictive control (MPC) may be constructed by ensuring the accuracy of the ANN model 120.

The test platform system for real-time control predicts future charging results and compares the future charging results with actual measured values to control charging speed, pressure ramp rate, or pressure increase rate, and constraints, control time intervals, sensitivity, etc., may be separately set to perform control within an optimal range within the system logic.

Primarily, optimal control may be performed based on real-time data from a charging station 200 and a hydrogen fuel mobility 300. However, in the event of a specific situation during system operation, control authority may be granted to directly control the pre-cooling temperature of a pre-cooler 210 and the cooling system of the hydrogen fuel mobility 300, thereby increasing the overall efficiency of the hydrogen fuel supply process.

As shown in FIG. 8, the control process begins by receiving a specified SOCsp from a customer (t=0, in step S710). For example, the current SOC may be 50%, and SOCsp may be 85%.

SOC(t) is given as a function of TCHSS(t) and PCHSS(t), and this process may be performed based on a general dynamic model.

In case that the current SOC(t) is equal to or greater than SOCsp (in step S720), hydrogen charging may be stopped. In case that the current SOC(t) is less than SOCsp (in step S720), i is set to t, and a moving horizon prediction involving an artificial neural network is performed (in step S730).

Step S730 may be performed by generating MPC predictions using the artificial neural network 120 or the like. In step S740, it may be determined whether the obtained n-number of predictions are optimized and satisfy the intended objectives.

In case that the obtained n-number of predictions are optimized, a control command PRR(t) may be obtained based on the n-number of predictions and control commands, and PRR(t) may be applied to the dispenser 100 and the vehicle tank 310 (in step S750).

Then, time t is incremented and new measured values TCHSS(t) and PCHSS(t) are obtained and input to step S720.

In case that the n-number of predictions obtained in step S730 are not optimized, step S730 may be performed again to obtain new n predictions and control commands.

In step S730 of FIG. 8, state prediction values (T, P) satisfying temperature and pressure limits may be generated for all arbitrary i and k.

Based on the current time i(=t), n-number of state prediction values and corresponding control commands may be derived.

Step S740 of FIG. 8 may be understood as a process of searching for a set of n-number of predictions that minimize a cost function representing whether the final control target SOCsp has been reached.

The output of the hydrogen fuel mobility 300, which includes state measured values of the CHSS 310 such as temperature and pressure, may be input as feedback to the artificial neural network model 120.

The output of the hydrogen charging station 200, which includes state measured values such as the temperature and pressure of pre-cooled hydrogen gas, may be input as feedback to the artificial neural network model 120.

The artificial neural network model 120 delivers the predicted output to the hydrogen fuel supply controller 110, and a supervisory system 130 may input future inputs obtained through simulation or model-based prediction to the artificial neural network model 120 via a module A 140.

The ANN-MPC-based control process is a control technique that utilizes both simulation and actual measured data, and performs at least part of the simulation using the artificial neural network model 120 and utilizes the prediction result in the control process.

Exemplary embodiments of the present disclosure aim to configure an integrated hydrogen charging control protocol based on real-time data, and the system is implemented using various elemental technologies.

The protocol mounted on the dispenser 100 may control the charging speed, pressure ramp rate, or pressure increase rate (PRR or [m_dot]) as outputs by using the data of pre-cooled hydrogen gas provided from the charging station 200 and the data of the storage tank 310 provided from the hydrogen fuel mobility 300 as real-time input values.

When an event situation such as an external environmental change occurs, the pre-cooling temperature of the charging station 200 and the cooling system of the hydrogen fuel mobility 300 may be directly controlled to comprehensively control charging speed, pressure ramp rate, pressure increase rate (PRR or [m_dot]), process efficiency, and so on.

To complement the control protocol, the pre-cooling system or pre-cooler 210 of the hydrogen charging station 200 may be independently provided with a self-cooling stabilization system.

In terms of temperature stabilization, the cooling stabilization system of the pre-cooler 210 may be independently controlled, and the control target value may be integrally adjusted in the protocol of the dispenser 100.

To enhance the economic efficiency of the charging station 200 and to complement the function of the integrated control protocol, additional functions related to temperature stabilization may be granted to the pre-cooler 210.

Due to the initial temperature and flow rate of hydrogen gas supplied to the pre-cooler 210, variations may occur in the pre-cooling temperature. To compensate for this, a new pre-cooler structure for temperature stabilization is proposed as exemplary embodiments of the present disclosure.

The pre-cooler 210 according to exemplary embodiments of the present disclosure may include a temperature control mechanism and control logic for linkage with the protocol.

A forced cooling system may be installed in the storage tank 310 of the hydrogen fuel mobility 300, and some of the compression heat generated during hydrogen charging may be cooled to improve the charging speed. The operation/control of the forced cooling system of the storage tank 310 may also be involved in the protocol.

In exemplary embodiments of the present disclosure, a temperature management function may be granted to the storage tank 310 of the hydrogen fuel mobility 300 to improve the hydrogen charging speed and complement the function of the integrated control protocol.

In exemplary embodiments of the present disclosure, the vehicle storage tank 310 may be equipped with a system for self-cooling to increase the overall charging speed and improve the safety of the hydrogen fuel mobility 300, and such system may include control logic for autonomous operation and for linkage with the protocol.

According to exemplary embodiments of the present disclosure, through such integrated control, the current charging efficiency may be improved, and preparation for the next charging may be smoothly supported.

In the case where the pre-cooling temperature of the pre-cooler 210 is set to -40°C (T40), when the target value of the pre-cooling temperature is reached but the ambient temperature is higher than the set value and the rise of the temperature on the storage tank 310 is greater than expected, control signals or current state information may be transmitted to the hydrogen fuel mobility 300/storage tank 310 so that the self-cooling system of the storage tank 310 may be operated.

On the contrary, when the pre-cooling temperature of the pre-cooler 210 is set to - 40°C but it is determined, in view of the external environment and actual data, that excessive cooling is occurring, the target value of the pre-cooling temperature may be adjusted (e.g., to -35°C).

When additional control of the pre-cooling target temperature and the temperature on the storage tank 310 is necessary, control information or control commands may be transmitted from the dispenser 100 to both the hydrogen fuel mobility 300 and the charging station 200.

According to exemplary embodiments of the present disclosure, the self-cooling systems of the hydrogen fuel mobility 300 and the charging station 200 may be independently controlled, or may be controlled by transmitting signals from the dispenser 100.

An integrated control method for hydrogen charging according to exemplary embodiments of the present disclosure may further include a step of evaluating whether the measured values of the current state satisfy constraint conditions.

The constraint conditions may be that the temperature and pressure of the compressed hydrogen storage system of the hydrogen vehicle do not exceed the respective temperature and pressure limits.

According to exemplary embodiments of the present disclosure, hydrogen fuel may be charged/supplied safely while improving the efficiency of the hydrogen charging/supply process and enhancing the speed and real-time responsiveness of the hydrogen charging/supply process.

According to exemplary embodiments of the present disclosure, a test method and test platform capable of precisely modeling the hydrogen charging/supply process based on real-time on-site dynamic data may be implemented.

According to exemplary embodiments of the present disclosure, a test method and a test platform may be implemented that provide a model capable of precisely controlling the hydrogen charging/supply process by considering the difference between modeling and simulation results based on a theoretical model and real-time on-site data, or by considering both the modeling and simulation results and the real-time on-site data.

According to exemplary embodiments of the present disclosure, a test technique for hydrogen charging control with real-time performance based on model predictive control (MPC) may be implemented.

According to exemplary embodiments of the present disclosure, a test technique may be implemented for improved control accuracy of hydrogen charging results based on an artificial neural network (ANN) model.

Upon receiving a user-specified charging amount (e.g., SOC), hydrogen may be charged/supplied until the target amount is reached through a control logic based on real-time communication and computation using a sequence such as that shown in FIGS. 11 and 8.

Various variables such as SOC, target pressure, time, and temperature may be used to set the charging amount, and the charging speed may be controlled to increase efficiency.

FIG. 9 is an operational flowchart illustrating a process in which a control level is determined based on a communication level, in a hydrogen fuel supply method according to exemplary embodiments of the present disclosure.

A method of supplying hydrogen fuel to mobility using hydrogen as fuel, according to exemplary embodiments of the present disclosure, may include a step (S1010) of determining a communication level of an available communication protocol; a step (S1020) of determining a control level related to the application of artificial neural network-based control or model predictive control to the hydrogen fuel supply process based on the communication level; and a step (S1030) of performing a process of supplying hydrogen fuel based on the determined control level.

FIG. 10 is a conceptual diagram illustrating a hydrogen fuel supply and control process for improving control performance when communication between the mobility and the dispenser is unavailable, based on the embodiment of FIG. 9.

As shown in FIGS. 9 and 10, in the hydrogen fuel supply method according to exemplary embodiments of the present disclosure, the step (S1030) of performing the hydrogen fuel supply process based on the determined control level may include: a step of predicting the current state information of the mobility based on an artificial neural network model that receives previously obtained state information as input, when the available communication protocol is no communication and the fuel supply protocol requires current state information of the mobility for hydrogen fuel supply control; a step of providing the predicted current state information of the mobility to the fuel supply protocol as information for hydrogen fuel supply control; and a step of performing the hydrogen fuel supply process based on control parameters generated by the fuel supply protocol based on the current state information.

As shown in FIG. 10, the charging station 200 may transmit ambient temperature and pre-cooled conditions to the dispenser 200. Although the mobility 300 is required to transmit CHSS conditions to the dispenser 200, due to lack of communication functionality, the dispenser 200 may not refer to the dynamic data of the mobility 300.

In this case, temperature and pressure prediction values of the CHSS predicted by the moving horizon prediction may be treated as ground truth values of the CHSS temperature and pressure and provided as input to the artificial neural network model. In this way, a hydrogen fuel supply process applying the ANN-MPC method may be implemented even in a communication failure situation.

That is, the predicted values of the temperature and pressure of the CHSS on the mobility 300 may be regarded as ground truth values of the CHSS temperature and pressure to operate the artificial neural network model. However, as described later, exemplary embodiments may also be implemented in which the confidence or weight assigned when estimating prediction values as ground truth is not set to 100% but is selectively adjusted.

At this point, SOCsp is the initially set target value, and control parameters for optimal fuel supply satisfying constraint conditions may be required. The constraint conditions may be set, for example, such that TCHSS is less than 85 [°C], PCHSS is less than 87.5 [MPa], and SOC is at most 100 [%].

Referring again to FIG. 9, in the hydrogen fuel supply method according to exemplary embodiments of the present disclosure, in the step (S1010) of determining the communication level of the available communication protocol, the communication level may be determined, based on whether communication is possible between the mobility and the dispenser or charging station supplying hydrogen fuel in the available communication protocol, whether static data of the mobility, dispenser, or charging station may be collected, whether dynamic data of the mobility, dispenser, or charging station may be collected, whether the reliability of the collected static data, the reliability of the collected dynamic data, and the collected static data may be used for safety functions, or whether the collected dynamic data may be used for safety functions.

In the step (S1020) of determining the control level, the control level may be determined, which includes a method for obtaining data on the mobility side when communication is not possible in the available communication protocol, a method for processing or predicting dynamic data required in the control process on the mobility side when communication is not possible in the available communication protocol, a method for collecting static data on the mobility, dispenser, or charging station side, a method for collecting dynamic data on the mobility, dispenser, or charging station side, a method for using the static data on the mobility, dispenser, or charging station side for hydrogen fuel supply control, or a method for using the dynamic data on the mobility, dispenser, or charging station side for hydrogen fuel supply control.

**[Table 1]**

| CATEGORY | LEVEL | DESCRIPTION |
|---|---|---|
| Non communication | Level 0 | When the vehicle or the hydrogen station lacks communication equipment, or when communication is unavailable due to a malfunction. |
| Communication | Level 1 | Communication is available, but the Communication is used for data |
| | | collection rather than for safety functions. When risk mitigation plans are provided for data defects, the data may be used to enhance the control functions of the fueling process. |
| | Level 2 | Communication is available, and static data is reliable and may be directly used for safety functions, while dynamic data is the same as in level 1. |
| Communication (ANN model basic operation) | Level 3 | Communication is available, and both static and dynamic data are reliable, allowing direct use for safety and control functions related to fuel supply. |

Table 1 illustrates an example in which communication levels are differentially defined from 0 to 3 based on the reliability level of communication, depending on various possible situations such as communication failure, malfunction, or lack of safety/reliability of data. The communication levels in Table 1 may refer to the communication levels included in ISO 19885-1, which is currently under development.

**[Table 2]**

| CAT EGO RY | LEVEL | Basic Information of Simulation | Charging Conditions | Retraining Conditions |
|---|---|---|---|---|
| Non-comm unicat ion | Level 0 | Assumption of the worst-case scenario based on vehicle tank total capacity and basic station information | Charge at constant lowest flow rate after checking initial vehicle residual pressure and total capacity | Analysis and reflection of only selected real failure cases observed in non-communication environments |
| Com munic ation | Level 1 | Generation of simulation base condition using static data of vehicle and station, and application of conservative standards to each static condition and dynamic condition | Using of received dynamic data as a reference (for verification in case of abnormal signals), and conservative estimation of the vehicle's temperature and pressure based on the | Retraining based on conservatively operated dynamic data (based on breakaway criteria), accumulation of received actual dynamic data, and derivation of correction |
| | | | temperature and pressure of the breakaway | factors through periodic comparative learning. |
| | Level 2 | Static data of the vehicle and the charging station being applied individually and directly, whereas the dynamic data being applied based on conservative criteria | Using of received dynamic data as a reference (for verification in case of abnormal signals), and conservative estimation of the vehicle's temperature and pressure based on the temperature and pressure of the breakaway | Retraining based on conservatively operated dynamic data (based on breakaway criteria), accumulation of received actual dynamic data, and derivation of correction factors through periodic comparative learning. |
| | Level 3 | Base simulation utilizing individual static and dynamic data of the vehicle and the charging station | Real-time control operation optimized for the situation based on real-time communication data | Retraining based on all recorded fueling data |

Table 2 illustrates control levels in which static and dynamic variables are designated according to the reliability level of communication, and the usage allowance range for unreliable data as well as substitute variables are specified. Although some functions may be limited when the communication level is low, fuel supply protocol operations may be executed according to each communication level.

In exemplary embodiments of the present disclosure, the ANN-MPC-based hydrogen fuel supply protocol corresponds to Level 3 as defined in Tables 1 and 2, and the ANN-MPC-based hydrogen fuel supply protocol may be assumed that the static data and dynamic data transmitted and received between the mobility 300 and the hydrogen station 200 are all reliable and thus directly usable.

In the hydrogen fuel supply method according to exemplary embodiments of the present disclosure, the control level may be determined such that static data and dynamic data of the mobility, dispenser, or hydrogen station are used as control input data required by the fuel supply protocol, and control parameters required by the fuel supply protocol are generated, in the case where the communication level of the available communication protocol allows bidirectional communication between the mobility and the dispenser or hydrogen station supplying hydrogen fuel to the mobility, and static and dynamic data of the mobility, dispenser, or hydrogen station may be collected in the step of determining the control level.

That is, when the reliability of the collected data is limited depending on the communication level, each collected data may be utilized for limited purposes in the hydrogen fuel supply control process based on the corresponding reliability.

In this case, the communication level and the corresponding control level may vary depending on the passage of time and changes in the environment. For example, the communication level at the beginning of hydrogen fuel supply may be Level 3, and accordingly, the control level may be set and hydrogen fuel supply may be performed. However, when the communication environment deteriorates or some equipment fails during the process, the communication level may drop.

In such a case, the control level may be reset according to the lowered communication level. When the communication level is restored, the control level may also be restored according to the restored communication level.

Referring to the exemplary embodiment of FIG. 10, when the initial communication level is Level 3, CHSS dynamic data from the mobility 300 may be obtained via bidirectional communication, and an ANN-MPC-based hydrogen fuel supply protocol may be provided. When the communication level changes to Level 0, the CHSS dynamic data from the mobility 300 may be replaced using predicted values. At this time, the most recently collected data during the communication Level 3 state may be used as an initial value to perform subsequent processes.

Meanwhile, the detailed exemplary embodiments of the present disclosure may be combined with each other as long as they are not in conflict, and may be implemented as a control method for hydrogen fuel supply.

For example, the no-communication exemplary embodiment of FIG. 10 and the no-communication exemplary embodiments of Tables 1 and 2 may be selectively implemented depending on the situation, but may also be complementarily implemented.

In a no-communication case, only the no-communication exemplary embodiment of FIG. 10 may be adopted, and the no-communication exemplary embodiments of Tables 1 and 2 may not be adopted. Conversely, in a no-communication case, only the no-communication exemplary embodiments of Tables 1 and 2 may be adopted, and the no-communication exemplary embodiment of FIG. 10 may not be adopted.

Meanwhile, the no-communication exemplary embodiment of FIG. 10 and the no-communication exemplary embodiments of Tables 1 and 2 may be implemented in a complementary manner. That is, as in FIG. 10, the predicted state value on the mobility 300 may be used as if the predicted state value were the actual state value. However, as shown in the exemplary embodiments of Tables 1 and 2, when the reliability is low, the predicted state value may be used with low reliability or low weight, and may be utilized only for limited purposes in the control process.

Meanwhile, a simulation model for implementing control levels according to communication levels may also be implemented. In this case, the initial model may be configured by reflecting the basic information of the mobility and the hydrogen station, and simulation conditions are set accordingly. Subsequently, communication level information may be reflected, and retraining of the basic model may be conducted based on the specific information of the mobility and the hydrogen station so that optimization of the artificial neural network model may be achieved.

The confirmation/reconfirmation of the communication level and the setting/resetting of the control level may be performed as follows:
① When the mobility enters the hydrogen station, the communication method between the mobility and the dispenser is checked. The communication method may be of various types depending on the applied standard protocol, such as non-communication, IrDA, wired, Bluetooth, etc., and the communication method does not determine the communication level. Even though the communication method is identified, communication may not be possible for various reasons, and in such cases, a non-communication method is regarded.
② The communication level corresponding to the confirmed communication method is checked, and among the communication level-specific specialized ANN models mounted on the dispenser, the model matching the communication level is selected.
③ After the protocol is determined, for communication levels Lv. 1, 2, and 3, static data is transmitted, and a preparation process for starting fueling is performed. This process includes communication checks and various preparation procedures for hydrogen transfer between the mobility and the hydrogen station. For the non-communication method of Lv.0, the process of transmitting and receiving static data is omitted.
④ When the fueling process proceeds in case of the non-communication method, fueling is carried out according to pre-defined rules. In case of the communication method, control functions utilizing dynamic data operate. In this case, Lv.1 and Lv.2 do not guarantee the reliability of received dynamic data, so the ANN model predicts the temperature and pressure results of the mobility using the ANN model's internal thermodynamic model. In the case of Lv.3, the received dynamic data is directly utilized.
⑤ When the target value is reached, fueling is terminated. In the non-communication method, except for information related to abnormal situations, no data is accumulated for retraining of the ANN model. For the communication method, data is sent to the ANN model for retraining, and the data itself is accumulated and used as big data.

FIG. 11 is a flowchart illustrating a hydrogen fuel supply and control process for improving control performance using an auxiliary control model and auxiliary control information for a hydrogen fuel supply process performed based on a first fuel supply protocol according to exemplary embodiments of the present disclosure.

FIG. 12 is a conceptual diagram illustrating an example of a platform in which the hydrogen fuel supply process of the exemplary embodiment of FIG. 11 is performed.

As shown in FIGS. 11 and 12, the auxiliary control model may be an artificial neural network model 120 or a control system including some functions of the artificial neural network model 120 and the controller 110.

In the hydrogen fuel supply method for a mobility using hydrogen as fuel according to exemplary embodiments of the present disclosure, the method may include a step (S2010) of performing a first hydrogen fuel supply process controlled based on a first fuel supply protocol; a step (S2020) of obtaining fuel supply data obtained from the first hydrogen fuel supply process; and a step (S2030) of providing auxiliary control information for a second hydrogen fuel supply process based on the fuel supply data.

Here, the first hydrogen fuel supply process may be an initial sequence of the hydrogen fuel supply process based on the target value set based on initial information. For example, the first hydrogen fuel supply process may be a process performed for a predetermined time period or until a predetermined control target is achieved. Alternatively, the first hydrogen fuel supply process may be an entire fueling process performed once.

In the hydrogen fuel supply method according to exemplary embodiments of the present disclosure, fuel supply data may be obtained during a predetermined first time period the step of obtaining fuel supply data. Auxiliary control information for a second hydrogen fuel supply process to be performed during a second time period after the first time period, may be provided in the step of providing auxiliary control information.

In the hydrogen fuel supply method according to exemplary embodiments of the present disclosure, the fuel supply data may be obtained while a predetermined first control target is achieved, in the step of obtaining fuel supply data. The auxiliary control information for a second hydrogen fuel supply process to be performed until a second control target is achieved after the first control target is achieved, may be provided in the step of providing auxiliary control information. Here, the control target may include SOC, target temperature, target pressure, and the like.

In the hydrogen fuel supply method according to exemplary embodiments of the present disclosure, the step of performing the first hydrogen fuel supply process may include a step of obtaining a first fuel supply control parameter for the hydrogen fuel supply process based on the control target set based on the initial information; and a step of performing the first hydrogen fuel supply process based on the first fuel supply control parameter.

The first protocol may be an "Other Protocol". In this case, the other protocol may be a conventional fuel supply protocol or a protocol used in existing standards that does not include ANN-MPC.

According to the exemplary embodiments shown in FIG. 11 and FIG. 12, the first protocol may be a primary protocol that performs hydrogen fueling for a predetermined period of time or until a predetermined condition is met, based on a target value set using initial information.

Currently operated protocols such as SAE J2601 or those being developed by ISO TC 197 WG24 generally possess universal characteristics, and are designed with the anticipation and consideration that efficiency may be reduced under predetermined circumstances. Due to this, in conventional protocols, speed optimization for individual conditions such as mobility and charging station is not easily achievable.

In the exemplary embodiments shown in FIG. 11 and FIG. 12, by using a universal protocol as the primary protocol and applying advanced technologies such as ANN-MPC at specific moments when predetermined conditions are met, it is possible to optimize the hydrogen fueling process and, in particular, expect a boosting effect in reducing fueling time. In this case, the auxiliary control information of the present disclosure may provide secondary control for the primary protocol. Furthermore, in another alternative exemplary embodiment of the present disclosure, the auxiliary control information of the present disclosure may be provided as information for control enhancement by optimizing the primary control information derived through the primary protocol based on specific conditions (for example, conditions specific to the charging station 200, dispenser 100, or mobility 300).

When the mobility 300 enters the charging station 200, the information of the mobility 300 may be identified and the fueling target may be set.

At this time, the table-based method used by the fueling protocol of conventional SAE J2601 uses an APRR-based method that proceeds with fueling at a constant speed, while the MC-formula method uses a PRR-based method that controls the fueling speed by reflecting some real-time data at fixed time intervals.

The method proposed in the exemplary embodiment of the present disclosure may propose an optimization control method that complements existing protocols as follows.

The primary protocol mounted in the dispenser 100 receives the information required for operation from the mobility 300 and the charging station 200, and proceeds with fueling by setting the initial target value (S2010).

An artificial neural network model 120 is optionally additionally mounted in the dispenser 100 where the primary protocol is installed to enhance the fueling speed, and all information delivered to the primary protocol is simultaneously delivered to the artificial neural network model 120 (S2020). This information may vary depending on the communication protocol or format of the mobility 300 and the charging station 200, and may include all transmittable static and dynamic data.

Based on the information delivered to the artificial neural network model 120, the temperature and pressure values of the storage tank on the mobility 300 at a future time are predicted, and the information calculated based on this prediction is delivered to the primary protocol (S2030).

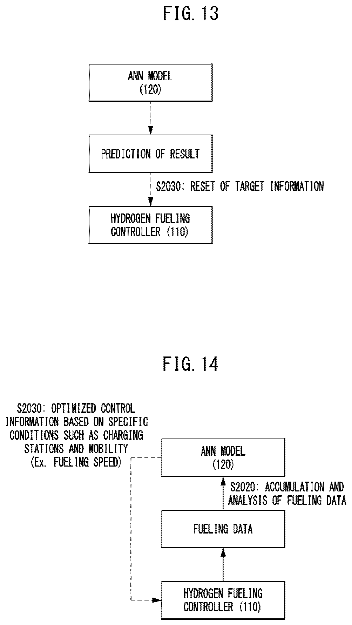

FIG. 13 is a conceptual diagram illustrating in detail a process in which the auxiliary control information of the hydrogen fueling process is provided, as exemplary embodiments of FIG. 12.

As shown in FIG. 13, in the hydrogen fueling method according to the exemplary embodiment of the present disclosure, the step of providing auxiliary control information (S2030) may include: predicting the result of a second hydrogen fueling process before the second hydrogen fueling process is performed, based on the fueling data using the auxiliary control model; and providing the reset second fueling control parameter for the second hydrogen fueling process to the first fueling protocol as the auxiliary control information, based on the predicted result of the second hydrogen fueling process.

In the hydrogen fueling method according to the exemplary embodiment of the present disclosure, the step of providing auxiliary control information (S2030) may include: generating a reset second fueling control parameter based on the fueling data using the auxiliary control model; and providing the reset second fueling control parameter as a new control parameter of the first fueling protocol for the second hydrogen fueling process.

In the hydrogen fueling method according to the exemplary embodiment of the present disclosure, the second fueling control parameter may include the average fueling rate of the single-speed-based control method, an application table for single-speed-based fueling, a combination of target pressure value and fueling speed (which may refer to a modified target pressure value and a corresponding modified fueling speed), or a fueling speed required to achieve a predicted result value at a future time.

For example, when the primary protocol is a protocol that performs the entire hydrogen fueling process to achieve a target using a single control parameter, the exemplary embodiment of the present disclosure may provide auxiliary control information that resets the control parameter by predicting the next state based on the current state for each time interval (S2030). In an alternative exemplary embodiment of the present disclosure, instead of dividing the process into time intervals, the control sequence up to an intermediate target for reaching the final target may be divided, and auxiliary control information may be provided that resets the control parameter by predicting the state up to the next control sequence for each of the divided control sequences (S2030). These exemplary embodiments of the present disclosure may be interpreted as secondary control or auxiliary control for the primary protocol.

When the primary protocol is a single-speed fueling protocol such as the SAE J2601 table-based method that does not utilize dynamic data, the application table may be changed to a table reflecting predicted and calculated results, or the modified target pressure and modified fueling speed may be directly reset.

When the primary protocol performs real-time control by partially or fully utilizing dynamic data, the fueling speed of the primary protocol may be reset by providing a predicted result value at a future time and suggesting a fueling speed to achieve the predicted value.

In the hydrogen fueling method according to exemplary embodiments of the present disclosure, the step of providing auxiliary control information may further include inputting the fueling data to the auxiliary control model so that the auxiliary control model may perform retraining using the fueling data.

The fueling result data obtained through the fueling optimization process of the artificial neural network model 120 may be retrained in the artificial neural network model 120 to improve the prediction accuracy of the artificial neural network model 120, and the processes of S2020 to S2030 and S2032 may be repeatedly performed during future fueling processes for the mobility 300.

FIG. 14 is a conceptual diagram illustrating in detail a process in which auxiliary control information of the hydrogen fueling process is provided, as another exemplary embodiment of FIG. 12.

As shown in FIG. 14, in the hydrogen fueling method according to exemplary embodiments of the present disclosure, the step of providing auxiliary control information (S2030) may include: obtaining a second fueling control parameter, which is reset for the second hydrogen fueling process, based on the mobility, the dispenser that performs hydrogen fueling to the mobility, the charging station in which the dispenser is installed, or environmental factors affecting the hydrogen fueling process; and providing the second fueling control parameter to the first fueling protocol as auxiliary control information.

When the artificial neural network model 120 is optionally added to the dispenser in which the primary protocol is mounted, and it is structurally or securely impossible to directly control the control logic of the primary protocol, speed optimization may be performed in an indirect manner by providing analyzed result data.

Charging is performed using information of the mobility equipped with a primary protocol and the charging station in the dispenser, and fueling data generated as a result of the fueling is transmitted to an artificial neural network model 120, where it is accumulated, trained, and analyzed.

The artificial neural network model 120 may enhance its own reliability through training using external data and may simulate the temperature and pressure changes in the mobility fueling situation by utilizing an internal thermodynamic model for its own prediction model. Therefore, the following information may be provided to the user by using the generated fueling data.

Through the learning and analysis of the fueling data, correction factors related to manual control of the primary protocol in operation may be provided. Information related to the optimization of fueling speed according to charging station, mobility, and season may be delivered to the user, and the user may manually control the fueling speed of the protocol based on the delivered information.

Since exemplary embodiments of the present disclosure provide optimized auxiliary control information based on conditions specific to the charging station 200, dispenser 100, or mobility 300 for the primary control information of the primary protocol (S2030), the auxiliary control information in this case may be understood as control enhancement information.

Referring again to FIG. 12, in another exemplary embodiment of the hydrogen fueling method according to the present disclosure, the step of providing auxiliary control information (S2030) may include: obtaining control information on the temperature of the hydrogen storage tank in the charging station in which the dispenser that performs hydrogen fueling to the mobility is installed, the pressure of the hydrogen storage tank in the charging station, or the pre-cooling temperature for the hydrogen storage tank in the charging station; and providing the obtained control information to the charging station.

In the case of a universal fueling protocol, strict and conservative criteria are applied to the rise in temperature and pressure in order to ensure safety even in the worst-case situation. Accordingly, in most cases, the temperature and pressure of the mobility storage tank remain below the predicted values even after the fueling process is completed. In this regard, it is possible to change the fueling speed, but when the current fueling speed poses no significant issue to the user, or it is impossible to control the fueling protocol mounted in the dispenser, operational efficiency may be improved by adjusting the pre-cooling temperature of the charging station 200 or the storage configuration and scale of the storage tank in the charging station (S2032). Regarding the pre-cooling temperature, efficiency of the charging station may be improved by using the artificial neural network model 120 to predict and reduce the load on the cooler within an allowable temperature range of the mobility storage tank. The storage tanks are mainly operated as low-pressure, medium-pressure, and highpressure tanks. When the artificial neural network model 120 analyzes a large amount of fueling data, the artificial neural network model 120 may suggest an optimal point for the type of storage tank used and the configuration of pressure application, thereby enhancing the operation efficiency of the charging station. The step of providing auxiliary control information (S2032) in this case may be understood as exemplary embodiments for optimizing the process of achieving the final control target through indirect control or indirect control assistance such as delivering a pre-cooling command to the charging station 200, in a situation where direct involvement in the control process is not possible.

The hydrogen fueling method according to exemplary embodiments of the present disclosure may further include performing a second hydrogen fueling process controlled based on the first fueling protocol utilizing the auxiliary control information (S2040).

In this case, the step of providing the auxiliary control information (S2030) may provide the auxiliary control information to the first fueling protocol.

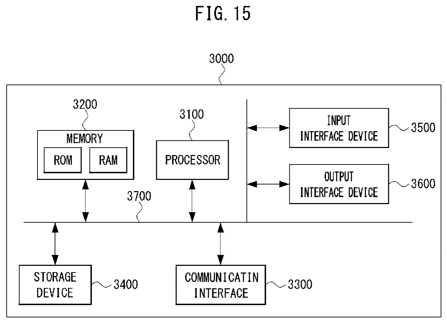

FIG. 15 is a conceptual diagram illustrating an example of a generalized hydrogen fueling control apparatus, hydrogen fueling control system, hydrogen fueling simulation apparatus, hydrogen fueling simulation system, hydrogen fueling test platform, hydrogen fueling test system, or computing system capable of performing at least part of the processes of FIGS. 1 to 14.

As shown in FIG. 15, a computing system 3000 according to exemplary embodiments of the present disclosure may include a processor 3100, a memory 3200, a communication interface 3300, a storage device 3400, an input interface 3500, an output interface 3600, and a bus 3700.

The computing system 3000 according to exemplary embodiments of the present disclosure may include at least one processor 3100 and a memory 3200 that stores instructions for directing the at least one processor 3100 to perform at least one step. At least some steps of the method according to exemplary embodiments of the present disclosure may be performed by the at least one processor 3100 executing instructions loaded from the memory 3200.

The processor 3100 may refer to a central processing unit (CPU), a graphics processing unit (GPU), or a dedicated processor on which the methods according to exemplary embodiments of the present disclosure are performed.

Each of the memory 3200 and the storage device 3400 may be composed of at least one of volatile and non-volatile storage media. For example, the memory 3200 may include at least one of a read-only memory (ROM) and a random access memory (RAM).

In addition, the computing system 3000 may include the communication interface 3300 for performing communication via a wireless network.

The computing system 3000 may further include the storage device 3400, the input interface 3500, the output interface 3600, and so on.

The respective components included in the computing system 3000 may be connected via the bus 3700 and may communicate with each other.

Examples of the computing system 3000 of the present disclosure may include a communicable desktop computer, laptop computer, notebook, smart phone, tablet PC, mobile phone, smart watch, smart glass, e-book reader, portable multimedia player (PMP), handheld gaming device, navigation device, digital camera, digital multimedia broadcasting (DMB) player, digital audio recorder, digital audio player, digital video recorder, digital video player, personal digital assistant (PDA), and the like.

A hydrogen fueling apparatus mounted on the mobility 300 that uses hydrogen as fuel according to exemplary embodiments of the present disclosure may include a memory 3200 storing at least one instruction; and a processor 3100 executing the at least one instruction.

In this case, the processor 3100 may perform the first hydrogen fueling process controlled based on the first fueling protocol, may obtain fueling data obtained during the first hydrogen fueling process, and may provide auxiliary control information for the second hydrogen fueling process based on the fueling data.

In the hydrogen fueling control apparatus according to exemplary embodiments of the present disclosure, when the processor 3100 performs the first hydrogen fueling process, the processor 3100 may obtain a first fueling control parameter for the hydrogen fueling process based on the control target set based on the initial information and may cause an apparatus to perform the first hydrogen fueling process based on the first fueling control parameter.

When providing the auxiliary control information, the processor 3100 may predict the result of the second hydrogen fueling process before the second hydrogen fueling process is performed using the auxiliary control model based on the fueling data, and may provide the second fueling control parameter, which is reset for the second hydrogen fueling process to the first fueling protocol as auxiliary control information, based on the predicted result of the second hydrogen fueling process.

When providing the auxiliary control information, the processor 3100 may generate the reset second fueling control parameter based on the fueling data using the auxiliary control model and may provide the reset second fueling control parameter to the first fueling protocol as a new control parameter for the second hydrogen fueling process.

The apparatus for controlling a hydrogen fueling process for mobility using hydrogen as fuel according to exemplary embodiments of the present disclosure may include a memory 3200 storing at least one instruction; and a processor 3100 executing the at least one instruction. The processor 3100, by the at least one instruction, may determine a communication level of an available communication protocol, may determine a control level related to the application of neural network-based control or model predictive control to the hydrogen fueling process based on the communication level, and may perform the hydrogen fueling process based on the determined control level.

The hydrogen fueling control apparatus according to exemplary embodiments of the present disclosure may be installed in a dispenser that performs hydrogen fueling to mobility or may be implemented as a controller that is not installed in the dispenser but is electronically communicable with the dispenser and may affect the fueling of the dispenser.

The operations of the method according to embodiments of the present disclosure may be implemented as a program or code stored in a computer-readable recording medium. The computer-readable recording medium includes any type of recording device in which information may be stored and read by a computer system. The computer-readable recording medium may also be distributed across computer systems connected via a network, and the program or code may be stored and executed in a distributed manner.

The computer-readable recording medium may include hardware devices specifically configured to store and execute program instructions, such as ROM, RAM, and flash memory. The program instructions may include machine code generated by a compiler as well as high-level language code that may be executed by a computer using an interpreter.

Some aspects of the present disclosure have been described in the context of a device, but it should be understood that corresponding method-based descriptions are also applicable, wherein blocks or devices correspond to method steps or features of method steps. Likewise, aspects described in the context of methods may also be represented as corresponding blocks or features of a device. Some or all of the method steps may be performed by (or using) hardware devices such as a microprocessor, programmable computer, or electronic circuit. In predetermined embodiments, at least one of the key method steps may be performed by such a device.

In some embodiments, a programmable logic device (e.g., a field-programmable gate array (FPGA)) may be used to perform some or all of the functions of the methods described herein. In such embodiments, the FPGA may operate in conjunction with a microprocessor to execute one or more of the methods described herein. In general, it is preferable that the methods be performed by a hardware device.

While the present disclosure has been described with reference to preferred embodiments, it will be understood by those skilled in the art that various modifications and changes may be made without departing from the spirit and scope of the invention as defined in the appended claims.

## Claims

1. A method for fueling hydrogen to mobility using hydrogen as fuel, comprising:
performing a first hydrogen fueling process controlled based on a first fueling protocol;
obtaining fueling data during the first hydrogen fueling process; and
providing auxiliary control information for a second hydrogen fueling process based on the fueling data.

2. The method of claim 1, wherein the obtaining of the fueling data is performed during a predetermined first time interval, and
wherein the providing of the auxiliary control information is performed for the second hydrogen fueling process during a second time interval following the first time interval.

3. The method of claim 1, wherein the obtaining of the fueling data is performed until a predetermined first control target is achieved, and
wherein the providing of the auxiliary control information is performed until a second control target is achieved after the first control target has been achieved.

4. The method of claim 1, wherein the performing of the first hydrogen fueling process comprises:
obtaining first fueling control parameters for the hydrogen fueling process based on a control target set according to initial information; and
performing the first hydrogen fueling process based on the first fueling control parameters.

5. The method of claim 1, wherein the providing of the auxiliary control information comprises:
predicting a result of the second hydrogen fueling process based on the fueling data using an auxiliary control model, before the second hydrogen fueling process is performed; and
providing a second fueling control parameter, which is reset for the second hydrogen fueling process to the first fueling protocol as the auxiliary control information, based on the predicted result.

6. The method of claim 1, wherein the providing of the auxiliary control information comprises:
generating a second fueling control parameter, which is reset, using an auxiliary control model based on the fueling data; and
providing the second fueling control parameter as a new control parameter of the first fueling protocol for the second hydrogen fueling process.

7. The method of claim 6, wherein the second fueling control parameter comprises an average fueling rate in a single-speed-based control scheme, an application table for single-speed-based fueling, a combination of a target pressure value and a fueling rate, or a fueling rate for achieving a predicted result value after a predetermined time.

8. The method of claim 1, further comprising:
inputting the fueling data into the auxiliary control model to allow the auxiliary control model to retrain on the fueling data.

9. The method of claim 1, wherein the providing of the auxiliary control information comprises:
obtaining a second fueling control parameter, which is reset for the second hydrogen fueling process based on at least one of the mobility, a dispenser that fuels the mobility with hydrogen, a charging station in which the dispenser is installed, or an environmental factor that affects the hydrogen fueling process; and
providing the second fueling control parameter to the first fueling protocol as the auxiliary control information.

10. The method of claim 1, wherein the providing of the auxiliary control information comprises:
obtaining control information regarding a temperature of a hydrogen storage tank at a charging station where a dispenser that fuels the mobility is located, a pressure of the hydrogen storage tank at the charging station, or a precooling temperature for the hydrogen storage tank at the charging station; and
providing the obtained control information to the charging station.

11. The method of claim 1, further comprising:
performing a second hydrogen fueling process controlled based on a first fueling protocol using the auxiliary control information,
wherein in the providing of the auxiliary control information, the auxiliary control information is provided to the first fueling protocol.

12. A method for fueling hydrogen to mobility using hydrogen as fuel, comprising:
determining a communication level of an available communication protocol;
determining a control level related to application of neural network-based control or model predictive control in the hydrogen fueling process based on the communication level; and
performing a hydrogen fueling process based on the determined control level.

13. The method of claim 12, wherein the performing of the hydrogen fueling process based on the determined control level comprises:
predicting a current state information of the mobility based on a neural network model to which previous state information is input in a case where the available communication protocol is no communication and the fueling protocol requires the current state information of the mobility for hydrogen fueling control;
providing the predicted current state information of the mobility to the fueling protocol as information for hydrogen fueling control; and
performing the hydrogen fueling process based on a control parameter generated by the fueling protocol based on the current state information.

14. The method of claim 12, wherein the determining of the communication level of the available communication protocol is performed based on one or more of whether communication is possible between the mobility and a dispenser or a charging station that fuels the mobility, whether static data of the mobility, the dispenser, or the charging station may be collected, whether dynamic data thereof may be collected, reliability of the collected static data, reliability of the collected dynamic data, whether the collected static data may be used for safety functions, or whether the collected dynamic data may be used for safety functions.

15. The method of claim 12, wherein the control level is determined, which comprises one or more of a method for obtaining data from the mobility side when communication is not possible in the available communication protocol, a method for processing or predicting dynamic data required in the control process from the mobility side when communication is not possible, a method for collecting static data of the mobility, the dispenser, or the charging station, a method for collecting dynamic data thereof, a method for using static data for hydrogen fueling control, or a method for using dynamic data for hydrogen fueling control, in the determining of the control level.

16. The method of claim 12, wherein the control level is determined such that static data and dynamic data of the mobility, dispenser, or hydrogen station are used as control input data required by the fuel supply protocol, and control parameters required by the fuel supply protocol are generated, in the case where the communication level of the available communication protocol allows bidirectional communication between the mobility and the dispenser or hydrogen station supplying hydrogen fuel to the mobility, and static and dynamic data of the mobility, dispenser, or hydrogen station may be collected, in the determining of the control level.

17. An apparatus for controlling a fueling process for fueling hydrogen to mobility using hydrogen as fuel, comprising:
a processor executing the at least one instruction,
wherein the processor is configured to:
perform a first hydrogen fueling process controlled based on a first fueling protocol,
obtain fueling data from the first hydrogen fueling process, and
provide auxiliary control information for a second hydrogen fueling process based on the fueling data.

18. The apparatus of claim 17, wherein the processor is further configured to, when performing the first hydrogen fueling process:
obtain a first fueling control parameter for the hydrogen fueling process based on a control target set based on initial information; and
perform the first hydrogen fueling process based on the first fueling control parameter.

19. The apparatus of claim 17, wherein the processor is further configured to, when providing the auxiliary control information:
predict a result of the second hydrogen fueling process before the second hydrogen fueling process is performed, based on the fueling data using an auxiliary control model; and
provide a reset second fueling control parameter based on the predicted result of the second hydrogen fueling process as the auxiliary control information to the first fueling protocol.

20. The apparatus of claim 17, wherein the processor is further configured to, when providing the auxiliary control information:
generate a reset second fueling control parameter based on the fueling data using an auxiliary control model; and
provide the reset second fueling control parameter as a new control parameter of the first fueling protocol for the second hydrogen fueling process.
